(19) Europäisches Patentamt
European Patent Office
Office européen des brevets

(11) **EP 4 440 172 A1**

(12) **EUROPEAN PATENT APPLICATION**
published in accordance with Art. 153(4) EPC

(43) Date of publication:
**02.10.2024 Bulletin 2024/40**

(21) Application number: **22909931.2**

(22) Date of filing: **19.12.2022**

(51) International Patent Classification (IPC):
***H04W 16/10*** (2009.01)

(52) Cooperative Patent Classification (CPC):
**H04W 16/10; H04W 28/02; H04W 72/1263**

(86) International application number:
**PCT/CN2022/139975**

(87) International publication number:
**WO 2023/116618 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 CN 202111583487**

(71) Applicant: **Huawei Technologies Co., Ltd.**
**Shenzhen, Guangdong 518129 (CN)**

(72) Inventors:
• **HU, Bin**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**
• **GE, Yiqun**
  **Shenzhen, Guangdong 518129 (CN)**
• **TONG, Wen**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND COMMUNICATION APPARATUS**

(57)    Embodiments of this application disclose a communication method and a communication apparatus. The method includes: A transmit end performs first encoding processing on first data by using an encoder neural network, to obtain a first sent feature, where the first sent feature is related to a channel distribution dimension of an environment in which the transmit end is located. The transmit end performs second encoding processing on the first sent feature by using a matching layer, to obtain a first feature, where the encoder neural network and the matching layer are obtained through independent training. The transmit end sends the first feature to a receive end, where the first feature is used by the receive end to obtain the first data. Because the encoder neural network and the matching layer are obtained through independent training, when a channel changes, adaptation to a new channel can be implemented by updating only the matching layer of the transmit end, so that a current channel may be adjusted within a shorter time, and overheads required for network training of the receive end are reduced. In addition, because the receive end does not need to participate in training, a requirement for a processing capability of the receive end can be reduced, so that use duration of the receive end can be prolonged.

FIG. 8

**Description**

This application claims priority to Chinese Patent Application No. 202111583487.7, filed with the China National Intellectual Property Administration on December 22, 2021 and entitled "COMMUNICATION METHOD AND COMMUNICATION APPARATUS", which is incorporated herein by reference in its entirety.

**TECHNICAL FIELD**

This application relates to the field of computers, and in particular, to a communication method and a communication apparatus.

**BACKGROUND**

Modern communication system designs are modular. A signal processing process is divided into a series of sub-modules, such as source encoding, channel encoding, modulation, and channel estimation. In each sub-module, modeling is performed based on a specific signal processing algorithm, and is usually approximately some simplified linear models. However, in this manner, each sub-module is optimized separately. Consequently, optimal end-to-end communication of an entire physical layer cannot be ensured. In contrast, more interference effects, such as amplifier distortion and channel impairment, are introduced to a conventional end-to-end communication system. In addition, a quantity of to-be-controlled factors and parameters increases. Therefore, complexity of performing end-to-end optimization by using a conventional method is very high.

With development of deep learning technologies, some researchers propose to replace a conventional communication transceiver design with a design that is based on an autoencoder, perform modeling of a transmit end and a receive end in a neural network manner, and learn a data distribution by using a large quantity of training samples, to predict a result. Such an end-to-end learning manner can implement joint optimization, and can achieve a better effect compared with an existing method. However, impact of an external environmental factor, namely, a channel, further exists in an end-to-end communication system. In a real communication scenario, a channel is not constant, especially on a time-varying Rayleigh fading channel (time-vary rayleigh fading channel). When an autoencoder (autoencoder, AE) network trained only on a specific channel encounters an unpredictable channel response, a situation of a matching error occurs (which is equivalent to a situation in which a value in a trained data set is abnormal), and retraining and adjustment need to be performed, which causes relatively large communication overheads of a receive end and a transmit end. Therefore, a communication solution with relatively low communication overheads is studied.

**SUMMARY**

Embodiments of this application disclose a communication method and a communication apparatus, and communication overheads are relatively low.

According to a first aspect, an embodiment of this application provides a communication method, where the method includes: A transmit end performs first encoding processing on first data by using an encoder neural network, to obtain a first sent feature, where the first sent feature is related to a channel distribution dimension of an environment in which the transmit end is located. The transmit end performs second encoding processing on the first sent feature by using a matching layer, to obtain a first feature, where the encoder neural network and the matching layer are obtained through independent training, and a dimension of the first feature is less than a dimension of the first sent feature. The transmit end sends the first feature to a receive end, where the first feature is used by the receive end to obtain the first data.

In this embodiment of this application, the transmit end performs first encoding processing on the first data by using the encoder neural network, to obtain the first sent feature, and performs second encoding processing on the first sent feature by using the matching layer, to obtain the first feature. Because the encoder neural network and the matching layer are obtained through independent training, when a channel changes, adaptation to a new channel can be implemented by updating only the matching layer of the transmit end, so that a current channel may be adjusted within a shorter time, and overheads required for network training of the receive end are reduced. In addition, because the receive end does not need to participate in training, a requirement for a processing capability of the receive end can be reduced, so that use duration of the receive end can be prolonged.

In a possible implementation, the method further includes: The transmit end updates a parameter of the matching layer based on a current channel of the transmit end. The transmit end performs first encoding processing on second data by using the encoder neural network, to obtain a second sent feature. The transmit end performs second encoding processing on the second sent feature by using the updated matching layer, to obtain a second feature. The transmit end sends the second feature to the receive end, where the second feature is used by the receive end to obtain the second data.

In this implementation, the transmit end updates the parameter of the matching layer based on the current channel of the transmit end. Adaptation to the new channel can be implemented by updating the matching layer of the transmit end, and the encoder neural network and a decoder neural network of the receive end do not need to be updated. In this way, time overheads and signaling overheads caused by updating the encoder neural network and the decoder neural network of the receive end can be avoided.

In a possible implementation, before the transmit end updates the parameter of the matching layer, the method further includes: The transmit end receives first indication information from the receive end, where the first indication information indicates the transmit end to update the parameter of the matching layer.

In this implementation, the transmit end receives the first indication information from the receive end, to update the parameter of the matching layer in a timely manner based on the first indication information.

In a possible implementation, a parameter of the encoder neural network remains unchanged in a process in which the transmit end updates the parameter of the matching layer.

In this implementation, the parameter of the encoder neural network remains unchanged in the process in which the transmit end updates the parameter of the matching layer. Only the parameter of the matching layer is updated and the current channel can be used. In this way, an operation amount can be reduced and efficiency of updating the matching layer can be improved.

In a possible implementation, the encoder neural network is obtained through training on a plurality of different channels.

The encoder neural network may be considered as a stack of a plurality of independent encoder sub-networks. Each encoder sub-network is obtained by jointly training on a specific channel the encoder sub-network and a decoder neural network whose parameter is fixed, and any two encoder sub-networks are obtained through training on different specific channels.

In this implementation, because the encoder neural network is obtained through training on a plurality of different channels, the encoder neural network can handle a plurality of channel conditions, that is, the encoder neural network may be applicable to the plurality of different channels. When the encoder neural network is applicable to the plurality of different channels, if a channel of the transmit end changes, the transmit end does not need to update the parameter of the encoder neural network, but only needs to update the parameter of the matching layer. The plurality of different channels may be obtained by performing clustering and division on channels in the environment in which the transmit end is currently located.

In a possible implementation, that the transmit end updates a parameter of the matching layer based on a current channel of the transmit end includes: The transmit end updates the parameter of the matching layer based on the current channel of the transmit end, a third sent feature, and a third received feature, where the third received feature includes a feature obtained by the receive end by receiving, on a first channel, a third feature sent by the transmit end, the third feature includes a feature obtained by the transmit end by performing second encoding processing on the third sent feature by using the matching layer, and the current channel of the transmit end is different from the first channel.

In this implementation, the transmit end updates the parameter of the matching layer based on the current channel of the transmit end, the third sent feature, and the third received feature, and does not need to interact with the receive end to obtain information other than information used to obtain the current channel. This reduces communication overheads.

In a possible implementation, before the transmit end updates the parameter of the matching layer based on the current channel of the transmit end, the method further includes: The transmit end obtains first information. The transmit end determines the current channel of the transmit end based on the first information.

In this implementation, the transmit end determines the current channel of the transmit end based on the first information, to update the parameter of the matching layer.

In a possible implementation, the first information includes channel information or received feature offset information from the receive end. The channel information represents related information of the current channel of the transmit end, and the received feature offset information represents a difference between the third received feature and a fourth received feature. The third received feature includes a feature obtained by the receive end by receiving, on the first channel, the third feature sent by the transmit end, and the fourth received feature includes a feature obtained by the receive end by receiving, on the current channel, the third feature sent by the transmit end.

In this implementation, the first information includes the channel information or the received feature offset information from the receive end, so that the transmit end obtains the current channel of the transmit end by using the first information.

In a possible implementation, the first sent feature includes an L-dimensional vector related to the channel distribution dimension, L is a product of V and T, the first data is represented by at least a V-dimensional vector, T is a quantity of channel types obtained by clustering channels in a current environment, T is an integer greater than or equal to 2, and V is an integer greater than 0.

In this implementation, the first sent feature includes the L-dimensional vector related to the channel distribution dimension, and may be applicable to different channels.

In a possible implementation, the method further includes: The transmit end trains the encoder neural network when the parameter of the matching layer remains unchanged.

In this implementation, the transmit end trains the encoder neural network when the parameter of the matching layer remains unchanged. This can ensure independence of the encoder neural network and the matching layer, and can also improve a speed of training the encoder neural network.

In a possible implementation, the method further includes: The transmit end receives second indication information from the receive end, where the second indication information indicates the transmit end to retrain the encoder neural network. The transmit end may retrain the encoder neural network based on the second indication information.

In this implementation, the transmit end receives the second indication information from the receive end, to retrain the encoder neural network based on the second indication information.

In a possible implementation, the method further includes: The transmit end sends third indication information to the receive end when training of the matching layer does not converge, where the third indication information indicates the receive end to retrain the encoder neural network.

In this implementation, the transmit end sends the third indication information to the receive end when training of the matching layer does not converge, and may stop training the matching layer in a timely manner, to obtain a converged matching layer through training by using a retrained encoder neural network.

In a possible implementation, the matching layer is differentiable.

In this implementation, the matching layer is differentiable and therefore does not affect gradient backhaul.

According to a second aspect, an embodiment of this application provides another communication method, where the method includes: A receive end receives a first received feature from a transmit end, where the first received feature includes a feature that is received by the receive end and that is obtained by transmitting, through a channel, a first feature sent by the transmit end, the first feature is obtained by the transmit end by performing encoding processing on a first sent feature by using a matching layer, the first sent feature is obtained by an encoder neural network of the transmit end by performing encoding processing on first data, and the encoder neural network and the matching layer are obtained through independent training. The receive end performs decoding processing on the first received feature by using a decoder neural network, to obtain the first data, where the decoder neural network and the matching layer are obtained through independent training.

In this embodiment of this application, the receive end receives the first received feature from the transmit end. Because the encoder neural network and the matching layer are obtained through independent training, when a channel changes, adaptation to a new channel can be implemented by updating only the matching layer of the transmit end, so that a current channel may be adjusted within a shorter time, and overheads required for network training of the receive end are reduced. In addition, because the receive end does not need to participate in training, a requirement for a processing capability of the receive end can be reduced, so that use duration of the receive end can be prolonged.

In a possible implementation, the method further includes: The receive end sends first indication information to the transmit end, where the first indication information indicates the transmit end to update a parameter of the matching layer.

In this implementation, the receive end sends the first indication information to the transmit end, to indicate the transmit end in a timely manner to update the parameter of the matching layer. This ensures that data can be accurately transmitted on the new channel.

In a possible implementation, that the receive end sends first indication information to the transmit end includes: The receive end sends the first indication information to the transmit end when a parameter representing a channel change degree is less than or equal to a first threshold.

In this implementation, the receive end sends the first indication information to the transmit end when the parameter representing the channel change degree is less than or equal to the first threshold, so that the transmit end updates the parameter of the matching layer when the channel change degree between the transmit end and the receive end is relatively small, to adapt to the new channel.

In a possible implementation, the method further includes: The receive end sends second indication information to the transmit end when the parameter representing the channel change degree is greater than the first threshold, where the second indication information indicates the transmit end to retrain the encoder neural network.

In this implementation, the receive end sends the second indication information to the transmit end when the parameter representing the channel change degree is greater than the first threshold. This can resolve a problem that data transmission cannot be successfully completed on the new channel by updating only the parameter of the matching layer.

In a possible implementation, after the receive end sends the first indication information to the transmit end, the method further includes: The receive end receives third indication information from the transmit end, where the third indication information indicates the receive end to retrain the encoder neural network.

In this implementation, the receive end receives the third indication information from the transmit end, to retrain the encoder neural network. This can resolve a problem that data transmission cannot be successfully completed on the new channel by updating only the parameter of the matching layer.

In a possible implementation, before the receive end sends the first indication information to the transmit end, the method further includes: The receive end receives fourth indication information from the transmit end, where the fourth indication information indicates that training of the encoder neural network is completed.

In this implementation, the receive end receives the fourth indication information from the transmit end, so that the receive end can learn in a timely manner that training of the encoder neural network is completed.

In a possible implementation, after the receive end sends the first indication information to the transmit end, the method further includes: The receive end sends first information to the transmit end, where the first information is used by the transmit end to update the parameter of the matching layer.

In this implementation, the receive end sends the first information to the transmit end, so that the transmit end updates the parameter of the matching layer by using the first information.

According to a third aspect, an embodiment of this application provides a communication apparatus. The communication apparatus has a function of implementing behavior in the method embodiment in the first aspect. The function may be implemented by hardware, or may be implemented by hardware by executing corresponding software. The hardware or software includes one or more modules or units that correspond to the foregoing functions. In a possible implementation, a processing module and a transceiver module are included. The processing module is configured to perform first encoding processing on first data by using an encoder neural network to obtain a first sent feature, where the first sent feature is related to a channel distribution dimension of an environment in which a transmit end is located. The processing module is further configured to perform second encoding processing on the first sent feature by using a matching layer, to obtain a first feature, where the encoder neural network and the matching layer are obtained through independent training, and a dimension of the first feature is less than a dimension of the first sent feature. The transceiver module is configured to send the first feature to a receive end, where the first feature is used by the receive end to obtain the first data.

In a possible implementation, the processing module is specifically configured to update a parameter of the matching layer based on a current channel of the processing module, is further configured to perform first encoding processing on second data by using the encoder neural network, to obtain a second sent feature, and is further configured to perform second encoding processing on the second sent feature by using the updated matching layer, to obtain a second feature. The transceiver module is further configured to send the second feature to the receive end, where the second feature is used by the receive end to obtain the second data.

In a possible implementation, the transceiver module is further configured to receive first indication information from the receive end, where the first indication information indicates the transmit end to update the parameter of the matching layer.

In a possible implementation, a parameter of the encoder neural network remains unchanged in a process in which the transmit end updates the parameter of the matching layer.

In a possible implementation, the encoder neural network is obtained through training on a plurality of different channels.

In a possible implementation, the processing module is specifically configured to update the parameter of the matching layer based on the current channel of the processing module, a third sent feature, and a third received feature, where the third received feature includes a feature obtained by the receive end by receiving, on a first channel, a third feature sent by the transmit end, the third feature includes a feature obtained by the transmit end by performing second encoding processing on the third sent feature by using the matching layer, and the current channel of the transmit end is different from the first channel.

In a possible implementation, the processing module is further configured to obtain first information and determine a current channel of the transmit end based on the first information.

In a possible implementation, the first information includes channel information or received feature offset information from the receive end. The channel information represents related information of the current channel of the transmit end, and the received feature offset information represents a difference between the third received feature and a fourth received feature. The third received feature includes a feature obtained by the receive end by receiving, on the first channel, the third feature sent by the transmit end, and the fourth received feature includes a feature obtained by the receive end by receiving, on the current channel, the third feature sent by the transmit end.

In a possible implementation, the first sent feature includes an L-dimensional vector related to the channel distribution dimension, L is a product of V and T, the first data is represented by at least a V-dimensional vector, T is a quantity of channel types obtained by clustering channels in a current environment, T is an integer greater than or equal to 2, and V is an integer greater than 0.

In a possible implementation, the processing module is further configured to train the encoder neural network when the parameter of the matching layer remains unchanged.

In a possible implementation, the transceiver module is further configured to receive second indication information from the receive end, where the second indication information indicates the transmit end to retrain the encoder neural network.

In a possible implementation, the transceiver module is further configured to send third indication information to the receive end when training of the matching layer does not converge, where the third indication information indicates the receive end to retrain the encoder neural network.

In a possible implementation, the matching layer is differentiable.

For technical effects brought by the possible implementations of the third aspect, refer to descriptions of technical effects of the first aspect or the possible implementations of the first aspect.

According to a fourth aspect, an embodiment of this application provides a communication apparatus. The communication apparatus has a function of implementing behavior in the method embodiment in the second aspect. The function may be implemented by hardware, or may be implemented by hardware by executing corresponding software. The hardware or software includes one or more modules or units that correspond to the foregoing functions. In a possible implementation, a transceiver module and a processing module are included. The transceiver module is configured to receive a first received feature from a transmit end, where the first received feature includes a feature that is received by a receive end (namely, the communication apparatus in the fourth aspect) and that is obtained by transmitting, through a channel, a first feature sent by the transmit end, the first feature is obtained by the transmit end by performing encoding processing on a first sent feature by using a matching layer, the first sent feature is obtained by an encoder neural network of the transmit end by performing encoding processing on first data, and the encoder neural network and the matching layer are obtained through independent training. The processing module is configured to perform decoding processing on the first received feature by using a decoder neural network, to obtain the first data, where the decoder neural network and the matching layer are obtained through independent training.

In a possible implementation, the transceiver module is further configured to send first indication information to the transmit end, where the first indication information indicates the transmit end to update a parameter of the matching layer.

In a possible implementation, the transceiver module is specifically configured to send the first indication information to the transmit end when a parameter representing a channel change degree is less than or equal to a first threshold.

In a possible implementation, the transceiver module is further configured to send second indication information to the transmit end when the parameter representing the channel change degree is greater than the first threshold, where the second indication information indicates the transmit end to retrain the encoder neural network.

In a possible implementation, the transceiver module is further configured to receive third indication information from the transmit end, where the third indication information indicates the receive end to retrain the encoder neural network.

In a possible implementation, the transceiver module is further configured to receive fourth indication information from the transmit end, where the fourth indication information indicates that training of the encoder neural network is completed.

In a possible implementation, the transceiver module is further configured to send first information to the transmit end, where the first information is used by the transmit end to update the parameter of the matching layer.

For technical effects brought by the possible implementations of the fourth aspect, refer to descriptions of technical effects of the second aspect or the possible implementations of the second aspect.

According to a fifth aspect, this application provides a communication apparatus. The communication apparatus includes a processor. The processor may be configured to execute computer-executable instructions stored in a memory, so that the method according to any one of the first aspect or the possible implementations of the first aspect is performed, or the method according to any one of the second aspect or the possible implementations of the second aspect is performed.

In this embodiment of this application, in a process of performing the foregoing method, a process of sending information in the foregoing method may be understood as a process of outputting information based on instructions of the processor. When outputting the information, the processor outputs the information to a transceiver, so that the transceiver transmits the information. After the information is output by the processor, other processing may further need to be performed, and then the information arrives at the transceiver. Similarly, when the processor receives input information, the transceiver receives the information, and inputs the information into the processor. Further, after the transceiver receives the information, other processing may need to be performed on the information before the information is input into the processor.

Operations such as sending and/or receiving related to the processor may be generally understood as instruction output that is based on the processor, unless otherwise specified, or if the operations do not conflict with an actual function or internal logic of the operations in related descriptions.

In an implementation process, the foregoing processor may be a processor specially configured to perform these methods, or may be a processor, for example, a general purpose processor, that executes computer instructions in the memory to perform these methods. For example, the processor may be further configured to execute a program stored in the memory. When the program is executed, the communication apparatus is enabled to perform the method according to any one of the first aspect or the possible implementations of the first aspect. In a possible implementation, the memory is located outside the communication apparatus. In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes the transceiver. The transceiver is configured to receive a packet, send a packet, or the like.

According to a sixth aspect, this application provides another communication apparatus. The communication apparatus includes a processing circuit and an interface circuit. The interface circuit is configured to obtain data or output data. The processing circuit is configured to perform the corresponding method according to any one of the first aspect or the possible implementations of the first aspect, or the processing circuit is configured to perform the corresponding method according to any one of the second aspect or the possible implementations of the second aspect.

According to a seventh aspect, this application provides a computer-readable storage medium. The computer-readable storage medium is configured to store a computer program. When the computer program is run on a computer, the method according to any one of the first aspect or the possible implementations of the first aspect is performed, or the method according to any one of the second aspect or the possible implementations of the second aspect is performed.

According to an eighth aspect, this application provides a computer program product. The computer program product includes a computer program or computer code. When the computer program product is run on a computer, the method according to any one of the first aspect or the possible implementations of the first aspect is performed, or the method according to any one of the second aspect or the possible implementations of the second aspect is performed.

According to a ninth aspect, this application provides a communication system that includes the communication apparatus according to any one of the third aspect or the possible implementations of the third aspect, and the communication apparatus according to any one of the fourth aspect or the possible implementations of the fourth aspect.

**BRIEF DESCRIPTION OF DRAWINGS**

To describe the technical solutions in embodiments of this application or the background more clearly, the following describes the accompanying drawings used in describing the embodiments of this application or the background.

FIG. 1 is an example of a satellite communication system according to an embodiment of this application;
FIG. 2 is an example of an inter-satellite communication system according to an embodiment of this application;
FIG. 3 is an example of a wireless communication system according to an embodiment of this application;
FIG. 4 is an example of a relationship diagram representing relationships between a sent feature, a matching layer, a transmitted feature, and a received feature according to an embodiment of this application;
FIG. 5 is a schematic diagram in which a transmit end independently updates a parameter of a matching layer according to an embodiment of this application;
FIG. 6A is a schematic diagram of a framework of an encoder neural network and a matching layer of a transmit end according to an embodiment of this application;
FIG. 6B is a schematic diagram of a framework of an encoder neural network and a matching layer of a transmit end according to an embodiment of this application;
FIG. 7A is a schematic diagram of a process of training an autoencoder according to an embodiment of this application;
FIG. 7B is a schematic diagram of a process of training a matching layer according to an embodiment of this application;
FIG. 8 is a flowchart of a communication method according to an embodiment of this application;
FIG. 9 is a flowchart of another communication method according to an embodiment of this application;
FIG. 10 is a flowchart of another communication method according to an embodiment of this application;
FIG. 11 is a flowchart of another communication method according to an embodiment of this application;
FIG. 12 is a flowchart of another communication method according to an embodiment of this application;
FIG. 13 is a flowchart of another communication method according to an embodiment of this application;
FIG. 14 is a flowchart of another communication method according to an embodiment of this application;
FIG. 15 is a flowchart of another communication method according to an embodiment of this application;
FIG. 16 is a flowchart of another communication method according to an embodiment of this application;
FIG. 17 is a flowchart of another communication method according to an embodiment of this application;
FIG. 18 is a schematic diagram of a structure of a communication apparatus according to an embodiment of this application;
FIG. 19 is a schematic diagram of a structure of another communication apparatus according to an embodiment of this application;
FIG. 20 is a schematic diagram of a structure of another communication apparatus 200 according to an embodiment of this application; and

FIG. 21 is a schematic diagram of a structure of another communication apparatus 210 according to an embodiment of this application.

## DESCRIPTION OF EMBODIMENTS

In the specification, claims, and the accompanying drawings of this application, terms such as "first" and "second" are only intended to distinguish between different objects but do not describe a specific order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a specific feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in the specification may be combined with another embodiment.

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items. For example, "A and/or B" may indicate the following three cases: Only A exists, only B exists, and both A and B exist, where A and B may be singular or plural. The term "a plurality of" used in this application means two or more.

As described in the background, currently, a communication solution with relatively low communication overheads needs to be studied. This application provides a communication solution with relatively low communication overheads. A main principle of the communication solution provided in this application is that a transmit end adjusts a channel change by updating a parameter of a matching layer of the transmit end through self-training, and a parameter of a decoder neural network of a receive end is fixed. In other words, when a channel between the transmit end and the receive end changes, the transmit end adjusts the channel change by updating the parameter of the matching layer of the transmit end through self-training, and does not need to retrain a network of the transmit end and a network of the receive end. This can reduce communication overheads caused by joint training of the transmit end and the receive end, and improve training efficiency. In addition, when the channel between the transmit end and the receive end changes, the parameter of the decoder neural network of the receive end is fixed. Therefore, using the communication solution provided in this application can reduce a requirement for a processing capability of the receive end, and can prolong use duration of the receive end.

The following describes in detail a network architecture in this application.

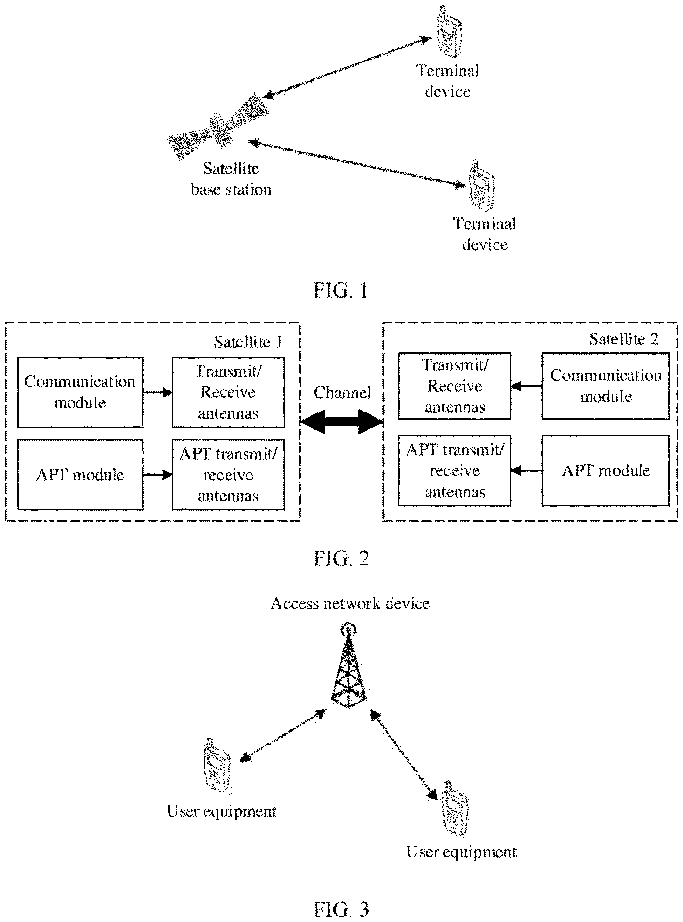

The communication solution provided in this application may be applied to communication systems such as satellite communication. FIG. 1 is an example of a satellite communication system according to an embodiment of this application. As shown in FIG. 1, a satellite communication system includes a satellite base station and a terminal type network element, for example, a terminal device in FIG. 1. The satellite base station provides a communication service to the terminal device, and the terminal device may include a device such as a smartphone, a smartwatch, or a tablet computer. The satellite base station transmits downlink data to the terminal device, where the data is encoded by using channel encoding, and channel-encoded data is transmitted to the terminal device after constellation modulation is performed on the channel-encoded data. The terminal device transmits uplink data to the satellite base station, where the uplink data may also be encoded by using channel encoding, and encoded data is transmitted to the satellite base station after constellation modulation is performed on the encoded data.

The communication solution provided in this application may be applied to an inter-satellite communication system. The inter-satellite communication system can be divided into two parts: spatial light beam acquisition pointing and tracking (acquisition pointing and tracking, APT) subsystem and communication subsystem. The communication subsystem is responsible for inter-satellite information transmission and is a main body of the inter-satellite communication system. The APT system is responsible for acquisition, pointing, and tracking between satellites. Acquisition is determining an arrival direction of an incident signal, pointing is adjusting a transmitted wave to point to a receiving direction, and tracking is continuously adjusting pointing and acquisition in an entire communication process. FIG. 2 is an example of an inter-satellite communication system according to an embodiment of this application. An inter-satellite communication system shown in FIG. 2 includes a satellite 1 and a satellite 2. Both the satellite 1 and the satellite 2 include a communication module, transmit/receive antennas, an APT module, and APT transmit/receive antennas. The communication module and the transmit/receive antennas belong to a communication subsystem, and the APT module and the APT transmit/receive belong to an APT subsystem. To minimize impact of attenuation and interference on a channel and ensure relatively high confidentiality and a relatively high transmission rate, APT needs to be adjusted in real time to continuously adapt to a change. The APT system may be an optical system. The APT system and the communication subsystem may be independent systems.

The communication solution provided in this application may be applied to wireless communication systems such as 5G or satellite communication. FIG. 3 is an example of a wireless communication system according to an embodiment of this application. As shown in FIG. 3, the communication system includes one or more user equipments (only two user equipments are used as an example in FIG. 1) and one or more access network devices (for example, a base station) that can provide a communication service to the user equipment. Only one access network device is used as an example in FIG. 1.

The user equipment (user equipment, UE) is a device that has a wireless transceiver function. The user equipment may communicate with one or more core network (core network, CN) devices (or referred to as core devices) by using an access network device (or referred to as an access device) in a radio access network (radio access network, RAN). The user equipment may be deployed on land, for example, including an indoor user equipment, an outdoor user equipment, a handheld user equipment, or a vehicle-mounted user equipment, may be deployed on a water surface (for example, on a ship), or may be deployed in the air (for example, on an airplane, a balloon, or a satellite). In this embodiment of this application, a UE may also be referred to as a terminal device, and may be a mobile phone (mobile phone), a mobile station (mobile station, MS), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in a smart city (smart city), a wireless terminal in a smart home (smart home), or the like. Optionally, the user equipment may be a handheld device, a vehicle-mounted device, a wearable device, a terminal in the internet of things, a terminal in the internet of vehicles, a terminal in any form in a 5G network and a future network, or the like that has a wireless communication function. This is not limited in this application.

An access network device may be any device that has a wireless transceiver function and can communicate with the user equipment, for example, a radio access network (radio access network, RAN) node that connects the user equipment to a wireless network. Currently, for example, the RAN node is a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), a wireless fidelity (wireless fidelity, Wi-Fi) access point (access point, AP), an integrated access backhaul (integrated access and backhaul, IAB), or the like. In this application, an example in which a base station is used as the access network device is used for description. The base station may include a baseband unit (baseband unit, BBU) and a remote radio unit (remote radio unit, RRU). The BBU and the RRU may be placed at different places. For example, the RRU is remotely deployed, and is placed in a heavy-traffic area, and the BBU is placed in a central equipment room. Alternatively, the BBU and the RRU may be placed in a same equipment room. Alternatively, the BBU and the RRU may be different components at a same rack.

It should be noted that, the wireless communication system mentioned in embodiments of this application includes but is not limited to: a narrowband internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 system (code division multiple access, CDMA2000), a time division-synchronization code division multiple access (time division-synchronization code division multiple access, TD-SCDMA) system, a long term evolution (long term evolution, LTE) system, a universal mobile telecommunications system (universal mobile telecommunications system, UMTS), a worldwide interconnection microwave access (worldwide interoperability for microwave access, WiMAX) communication system, a 4th generation (4th generation, 4G) communication system, a non-terrestrial network (non-terrestrial network, NTN) system, a 5th generation (5th generation, 5G) communication system, or a new radio (new radio, NR) system, and another future communication system such as 6G.

The communication solution provided in this application relates to a network structure of a transmit end and a training interaction procedure of a transmit end and a receive end (a transmit end and a receive end). In the communication solution provided in this embodiment of this application, the transmit end includes an encoder neural network and a matching layer (matching layer), and the receive end includes a decoder neural network. The matching layer may be referred to as a channel matching layer or an adaptive channel encoding module. In this application, the encoder neural network and the matching layer of the transmit end are independently trained. A feature that the encoder neural network and the matching layer are independent of each other is used, so that impact of a time-varying fading channel on training of an autoencoder can be avoided by only updating the matching layer (where a parameter of the encoder neural network remains unchanged). A network structure feature in this application includes the following content.

(1) **Sent feature**: The sent feature is an output of sent data passing through an encoder neural network that is located at a transmit end and whose training is completed, and the sent feature is set to an $L$-dimensional feature vector $f = [f_1, f_2, \ldots, f_L]$ related to a channel distribution dimension. More specifically, the sent feature may be considered as an $T$-dimensional feature space

$$\vec{F} = \left[\tilde{f}_1, \tilde{f}_2, \ldots, \tilde{f}_T\right]$$ obtained by performing dimension increase processing on to-be-sent data $u$ by using the encoder neural network $f(u; \theta_{enc})$, and a dimension of each feature vector is $V$, that is, $\tilde{f}_i = [f_{i,1}, f_{i,2}, \ldots f_{i,V}]$. A specific representation of the foregoing channel distribution dimension is a largest quantity $T = A \times \phi$ determined by performing clustering and division on a channel in a current environment, where $A$ represents an amplitude division quantity, $\phi$ represents a phase division quantity, and both $A$ and $\phi$ are integers greater than 0. The encoder neural network may be considered as a stack of a plurality of independent encoder sub-networks, and each encoder sub-network corresponds to a type of channel. If a transmit end of a conventional autoencoder (corresponding to one encoder sub-network) outputs a vector whose dimension is $V$, the encoder neural network of the transmit end provided in this application outputs a vector (the sent feature) whose total dimension is $L = V \times T$. The sent feature design may be understood as that a conventional autoencoder design only performs optimization for a specific channel. To adapt to a channel change, the transmit end needs to have pre-training results for scenarios under various channel distributions in an environment in which the transmit end is located. Therefore, compared with a feature of the conventional autoencoder, the sent feature may alternatively be considered as a higher-order tensor obtained by adding a dimension related to a channel distribution on a basis of the feature of the conventional autoencoder. For example, a feature output by the conventional autoencoder is a vector whose dimension is $V$, and 10 types of channels are obtained by performing clustering and division on channels in a current environment of the transmit end. The encoder neural network of the transmit end provided in this application outputs a vector whose dimension is $V \times 10$, and each channel corresponds to a vector whose dimension is $V$. It may be understood that, the feature output by the conventional autoencoder is a feature of the sent data on one type of channel, and the feature output by the encoder neural network of the transmit end provided in this application includes features of the sent data on a plurality of different channels. In addition, because a modulation order is determined, a total quantity of codewords may also be determined. For different codewords, it may be considered that there are a total of $n$ such different sent features $f^{(n)}$.

(2) **Received feature**: The received feature is an input of the sent data into a decoder neural network that is located at the receive end and whose training is completed, and the received feature is set to a $K$-dimensional received vector $r = [r_1, r_2, \ldots, r_K]$. The received feature in embodiments of this application is described as a fixed received feature $r_s$ unrelated to a channel distribution. The received feature may be obtained through joint training of the encoder neural network and the decoder neural network on some specific channels $h_s$. Formally, $r_s$ may be described as all possible data that is input, through the channel $h_s$, into the decoder neural network of the receive end. The transmit end may set it as a training target of a matching layer. In other words, it is expected that, a parameter of the matching layer is adjusted so that received features obtained at the receive end after same sent data passes through other different channels are the same.

(3) **Parameter of a matching layer**: The parameter of the matching layer may be represented as a matrix

$$A^{(n)} = \left[a_{l,i}^{(n)}\right]_{L \times K}$$, or a tensor description

$$A^{(n)} = \left[a_{v,t,i}^{(n)}\right]_{V \times T \times K}$$, and a quantity of parameters of the matching layer may also be determined to be n based on a total quantity of codewords. An input of the matching layer is the sent feature $f$, and an output is the $K$-dimensional transmitted feature $t$ $= [t_1, t_2, \ldots, t_K]$, where $$t_i = \sigma\left(\sum_l a_{l,i}^{(n)} f_l^{(n)}\right)$$, and $\sigma$ is a non-linear function, for example, a batch normalization operation. A transmitted feature may be understood as an output value obtained after the transmit end passes through all networks (including an encoder neural network and the matching layer), namely, an output obtained by performing forward derivation by the entire network of the transmit end. It can be known from a description of a linear transmission of a channel that $r = ht + n$. Therefore, a received feature affected by a new channel may be determined as $r' = h'\sigma(Af) + n$, and adjustment of the parameter of the matching layer may be considered as correlation optimization between an original received feature $r_0$ and the received feature $r'$ affected by the new channel. For example, an inner product of the two features is the largest.

(4) A memory buffer (memory buff) in the transmit end is configured to record values of the sent feature $f^{(n)}$ and the received feature $r^{(n)}$ in a current period of time, and the values are used as a data set for independent training of the transmit end. The memory buffer may be designed as a first-in first-out queue, which may track the sent data at any time to update trained data, and may obtain a coding gain from a sent data source distribution. A training set in the memory buffer can well represent a high-dimensional continuous space in which the sent data is located, and the transmit end may determine, by using the training set, an early stopping determination of training convergence.

Feature differences between the encoder neural network and the matching layer are as follows.

Input and output dimension:

An input of the encoder neural network is the sent data, and an output is a vector in a dimension related to the channel distribution. An input of the matching layer is the vector in the dimension related to the channel distribution, and an output is constellation point coordinates corresponded based on a modulation order. It is understood that an output of an encoder neural network in an original AE is constellation point coordinates. The encoder neural network herein obtains constellation point coordinates on different channels, and coordinates suitable for successful transmission on a current channel are corresponded by using the matching layer.

Function:

The encoder neural network performs feature extraction on input data and can store feature extraction policies for different channels.

The matching layer may be considered as attention (attention) between the sent feature and the transmitted feature (which may be obtained by using the received feature), and attention is paid to some channel-related features in input high-dimensional features.

The following describes, with reference to a channel model, a principle that the channel change may be adapted to by updating the parameter of the matching layer.

A channel may be approximately represented by using a formula: $h = h_s + \Delta h_d + \delta h_m$. $h_s$ represents a static channel part, which is determined by a relative distance, locations, and surrounding static environments of the receive end and the transmit end, and it may be considered that the value is fixed within a specific time period. $\Delta h_d$ represents a dynamic channel part, which is related to random events such as movement or blocking of a device, and this part may be obtained by estimating some prior information. For example, the dynamic channel information may be obtained by performing autoregressive model channel prediction based on channel data correlation, by monitoring environment change for estimation by the transmit end by using a sensing device, or by performing estimation based on an estimation method and feeding back method of existing channel state information (channel state information, CSI). In addition, the dynamic channel information may alternatively be implicitly fed back in a received feature offset, and the received feature offset is represented as a difference $\Delta r = r' - r_s$ between the received feature $r'$ on the new channel and the fixed received feature $r_s$ obtained through training of an autoencoder. This part mainly overcomes impact of this part by using the matching layer, to ensure effectiveness of a system in a time-varying fading channel environment. $\delta h_m$ indicates a distorted channel part, which is caused by unavoidable measurement uncertainty. However, it may be considered that this part is relatively small compared with $h_s$ and $\Delta h_d$, and has little impact on performance after a channel matching layer is adjusted and processed.

Under the foregoing channel model assumption, a problem of time-varying fading channel distortion of the autoencoder may be transformed into a problem of matching, by using the matching layer, features extracted by the networks of the receive end and the transmit end under impact of $\Delta h_d$.

A process of optimizing an autoencoder part, namely, the encoder neural network (Encoder NN) of the transmit end and the decoder neural network (Decoder NN) of the receive end, on a channel $h_s$ is similar to a training process of the conventional autoencoder. Specific steps are as follows.

(1) The transmit end performs first encoding processing on the sent data by using the encoder neural network, and outputs the $L$-dimensional sent feature $f = [f_1, f_2, \ldots, f_L]$ related to the channel distribution dimension. The sent feature is a result obtained by performing pre-training for scenarios under various channel distributions in the environment, and channel information of a related distribution is stored by using the encoder neural network. Compared with an output feature of the conventional autoencoder, a representation of the sent feature may be considered as adding a dimension $T$ related to the channel distribution on the basis of the output feature of the conventional autoencoder, to become a higher order tensor. Because a communication training set is different from an image data set, when the modulation order $m$ is determined, it may be considered that a total quantity of codeword types of the sent data is fixed to $n = 2^m$. Therefore, design is performed for each type of codeword, and there are a total of $n$ such different sent features $f^{(n)}$.

(2) The transmit end inputs the sent feature $f$ to the

$$A^{(n)} = \left[a_{l,i}^{(n)}\right]_{L \times K}$$

matching layer , and obtains the $K$-dimensional transmitted feature $t = [t_1, t_2, \ldots, t_K]$ through operating (second encoding processing),

$$t_i^{(n)} = \sigma\left(\sum_l a_{l,i}^{(n)} f_l^{(n)}\right)$$

where A quantity of the transmitted features may be determined based on the total quantity of codeword types to be $n$, and an initial value $A_0^{(n)}$ of the matching layer may be set to be initialized at random.

(3) The receive end receives the transmitted feature $t$ sent by the transmit end through the channel $h$, to obtain the K-dimensional received feature $r = [r_1, r_2, \ldots, r_K]$, where

$$r_i^{(n)} = h_i \sigma\left(\sum_l a_{l,i}^{(n)} f_l^{(n)}\right) + n_i$$

. The receive end inputs the K-dimensional received feature $r$ into the decoder neural network of the autoencoder at the receive end, to obtain codeword information of the receive end. For ease of writing, a subsequent symbol superscript (n) is omitted, indicating a case under a specific codeword.

(4) The receive end computes any target function, for example, a mean square error

$$min\ L = \frac{1}{N}\sum_i (\hat{u}_i - u_i)^2$$

or a binary cross entropy $min\ L = -\frac{1}{N}\sum_i \sum_c u_{ic} log(p_{ic})$, to obtain a loss value. N is a training batch (batch) size, $u_i$ and $\hat{u}_i$ are respectively sent data of the transmit end and data decoded by the receive end, $p_{ic}$ is a prediction probability that decoded data i belongs to a category c, and $u_{ic}$ is a category sign function (0 or 1). Finally, a parameter of the networks of the receive end and the transmit end are trained through gradient backhaul. Because the matching layers are differentiable functions, gradient backhaul is not affected. After training of the networks of the receive end and the transmit end of the specific channel $h_s$ is completed, the parameter of the decoder neural network of the receive end may be fixed, to ensure that the received feature $r_s$ does not change with a channel, and the encoder neural network of the transmit end is trained, so that pre-training effects on different channels are implemented.

The following describes a function of the matching layer with reference to the accompanying drawing that represents relationships between the sent feature, the matching layer, the transmitted feature, and the received feature.

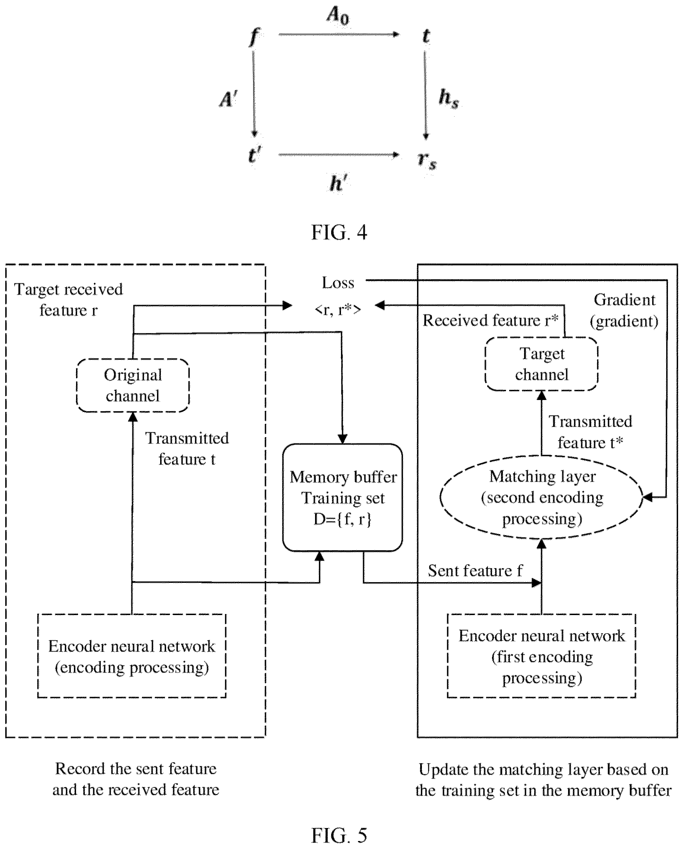

FIG. 4 is an example of a relationship diagram representing relationships between a sent feature, a matching layer, a transmitted feature, and a received feature according to an embodiment of this application. As shown in FIG. 4, an encoder neural network of a transmit end and a decoder neural network of a receive end are trained, so that it may be obtained that a mapping relationship between a sent feature of the encoder neural network of the transmit end and a received feature of the receive end is $h_s \circ A_0: f \rightarrow r_s$. In a new channel environment $h'$, a parameter of a matching layer is adjusted, so that the sent feature $f$ is mapped to a new transmitted feature $t'$. In this way, $h_s \circ A_0 = h' \circ A'$, and the receive end can complete a correct decoding operation on a fixed received feature in the new channel environment. $A'$ represents an adjusted parameter of the matching layer. "$\circ$" represents a composite operation. Herein, an operation of passing through a channel or a network may be understood as a function operation. Therefore, $A'$ is first applied to a sent feature $f$, and then $h'$ is applied to the sent feature $f$. $h' \circ A'$ may be represented as $h'(A'(f))$. It may be understood that, a function of the matching layer is to map the sent feature $f$ to the new transmitted feature $t'$ by adjusting the parameter of the matching layer in the new channel environment $h'$, so that $h_s \circ A_0 = h' \circ A'$. In other words, the parameter of the matching layer is adjusted, so that when the transmit end sends same data on different channels, the receive end can receive a same received feature.

In some embodiments, if the transmit end needs the receive end to feed back channel information, the channel information is not limited to using a common channel parameter, for example, signal strength and CSI, and an offset of the received feature may be used as a feedback value.

In a training process of an AE, the receive end obtains the fixed received feature $r_s$ through training. Therefore, different channel information may be implicitly included in a received feature offset. A formula reflecting a relationship between the received feature offset and the channel information is as follows:

$$\Delta r = r' - r_s$$
$$= h' \circ A_0(f) - h_s \circ A_0(f)$$
$$= (h' - h_s) \circ A_0(f) = \Delta h_d \circ A_0(f) \quad (1)$$

Similarly, the foregoing target function may alternatively be defined as the received feature offset. For a specific expression, refer to the foregoing formula. It can be learned that the channel information in this case is also implicitly included in the received feature offset. However, a difference lies in that training of the parameter of the matching layer becomes a reinforcement learning manner, and the received feature offset is used as a reward. In this solution, complete channel information or a complete feature vector is not fed back, and the received feature offset is a scalar, and may have fewer values.

The following describes a procedure in which a transmit end independently updates a parameter of a matching layer according to an embodiment of this application with reference to the accompanying drawings. FIG. 5 is a schematic diagram in which a transmit end independently updates a parameter of a matching layer according to an embodiment of this application. As shown in FIG. 5, a training set $D$ is recorded in a memory buffer, and the training set $D$ includes a sent feature (for example, $f$) and a received feature (for example, $r$). A transmit end obtains a target received feature $r$ of a receive end by sampling the received feature in the training set. The transmit end performs, by using an encoder neural network, first encoding processing on sent data corresponding to the target received feature $r$, to obtain a sent feature $f$ (corresponding to the target received feature $r$), performs, by using a matching layer, second encoding processing on the sent feature $f$ to obtain a transmitted feature $t'$, computes a received feature $r'$ obtained by transmitting the transmitted feature $t'$ on a target channel (a current channel), computes an error between the target received feature $r$ and the received feature $r'$, and updates a parameter of the matching layer by using the computed error (for example, gradient information). An arrow pointing to the matching layer in FIG. 5 represents a process of updating the matching layer. A dashed box in FIG. 5 shows an example of obtaining the training set in the memory buffer by recording the sent feature $f$ and the target received feature $r$. In this example, the transmit end performs encoding processing on the sent data by using the encoder neural network, to obtain the sent feature $f$ and a transmitted feature $t$, and the target received feature $r$ is a received feature that is received by the receive end and that is obtained by transmitting the transmitted feature $t$ through an original channel. In other words, the transmit end collects the sent feature $f$ on the original channel and the target received feature $r$ received by the receive end, and records the sent feature and the target received feature in the memory buffer. The transmit end sends the transmitted feature $t'$ on a target channel, and the receive end receives the received feature $r'$. The transmit end adjusts the output transmitted feature by updating the parameter of the matching layer, so that the receive end receives the target received feature $r$.

This embodiment of this application provides some implementations in which the transmit end independently updates the parameter of the matching layer.

Manner 1: The transmit end updates the matching layer of the transmit end based on an optimization problem of feature matching. A possible manner is as follows.

The transmit end may record, at the transmit end by using the memory buffer, the sent feature $f$ and the received feature $r_s$ that are obtained on a channel $h_s$. Based on a new $\Delta h_d$, $h' = h_s + \Delta h_d$ may be obtained. Therefore, a received feature at a new moment t is $r' = h'\sigma(A_0 f) + n$. In this case, feature matching is equivalent to solving an optimized offset target

$$\min_{A} \mathbb{E}[D(r', r_s)]$$

of an optimization problem, where $D$ is distance measurement, and the optimized offset target may be specifically, for example, a square error

$$\min_{A} \mathbb{E}[||r' - r_s||^2]$$

, a feature covariance KL divergence

$$\min_{A} \mathbb{E}[KL(R'||R_s)]$$

, and a hybrid error of rigidity and distance

$$\min \left(||r' - r_s||^2 + 1 - \frac{<r_s, r'>}{||r_s||||r'||}\right)$$

. Finally, the transmit end may iteratively compute the parameter of the matching layer $A'$ by using $A_0$ as an initial value and by using a limited-memory BFGS (limited-memory broyden-fletcher-goldfarb-shan-no, L-BFGS), a stochastic gradient descent method, or the like.

Manner 2: The transmit end updates the matching layer of the transmit end based on reservoir computing (reservoir computing). A possible manner is as follows.

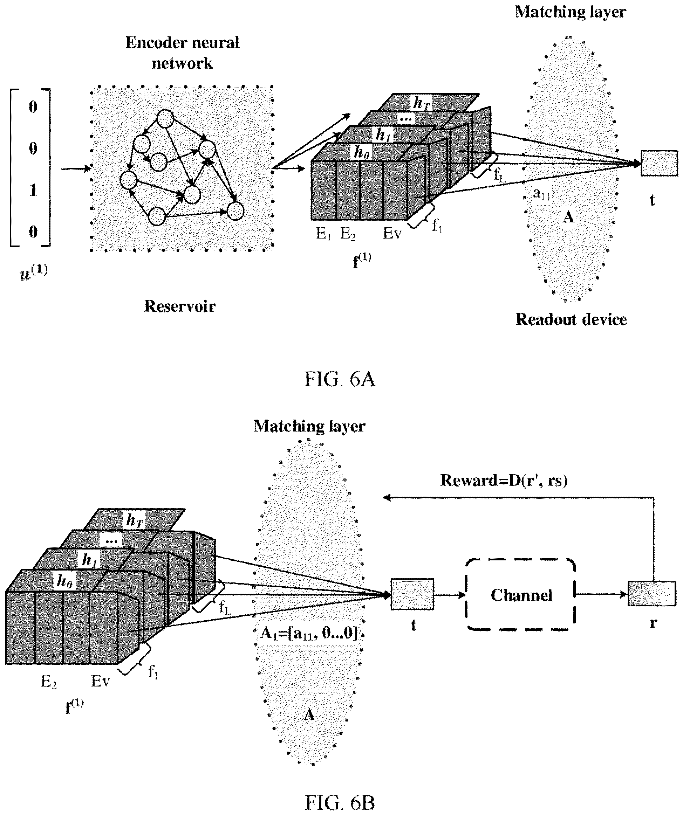

When the transmit end updates the parameter of the matching layer, the parameter of the encoder neural network of the transmit end is fixed. Therefore, the encoder neural network (encoder NN) of the transmit end may be considered as a reservoir (reservoir) structure, which generally satisfies nonlinearity and can store information by using a recurrent connection unit, for example, an echo state network (echo state network, ESN). Therefore, it can be understood that the encoder neural network with the reservoir structure can store information of different channels, and input $L$-dimensional sent features on different channels. FIG. 6A is a schematic diagram of a framework of an encoder neural network and a matching layer of a transmit end according to an embodiment of this application. In FIG. 6A, $u^{(1)}$ represents sent data, $f^{(1)}$ represents a sent feature, a rectangular box $f_1, f_2, \dots, f_L$ represents L-dimensional sent features of an encoder neural network on different channels, $A$ represents a parameter of a matching layer, $a_{11}$ represents one parameter of the matching layer, and $t$ represents a transmitted feature.

The matching layer of the transmit end may be considered as a readout (readout) operation. The transmit end performs a linear transformation operation on an output (namely, the sent feature $f$) of the reservoir, and may read, based on a weight $A_{out}$, some features that match current channel information, to obtain a transmitted feature $t$.

The transmit end may obtain, by performing a reverse operation on the received feature $r_s$, a target transmitted feature $t^*$, namely, a transmitted feature that needs to be output by the matching layer of the transmit end. Therefore, the problem becomes solving

$$\min\left\|A_{out}f - t^*\right\|_F^2$$

. The reverse operation on the received feature $r_s$ may be performing a reverse operation by using $r_s = h't + n$ to obtain the transmitted feature $t^*$, where $h'$ represents a new channel.

The transmit end may directly compute the required weight $A_{out}$ of the matching layer by using a linear regression $A_{out} = tf^T(ff^T)^+$ or a ridge regression $A_{out} = tf^T(ff^T + \lambda I)^{-1}$. '+' indicates Moore-Penrose inverse.

Manner 3: The transmit end selects the parameter of the matching layer of the transmit end based on reinforcement learning (reinforcement learning) of a stochastic bandits (stochastic bandits) problem. A possible manner is as follows.

The transmit end may consider a problem of updating the parameter of the matching layer as the stochastic bandits problem, that is, an offset target function value fed back by the receive end is used as a reward, to select an optimal parameter of the matching layer (namely, the parameter of the matching layer) more quickly.

The parameter of the matching layer of the transmit end may be preset as a linear combination under a limited quantity of different channel distributions and the linear combination is selected as an action. For example, a parameter $A_1$ indicates selection of extracting a sent feature $f$ on a channel $h_1$. For example, a parameter $A_2$ indicates selection of extracting a sent feature $f$ on a channel $h_2$. Therefore, theoretically, there are a limited quantity of designs of the parameter A. FIG. 6B is a schematic diagram of a framework of an encoder neural network and a matching layer of a transmit end according to an embodiment of this application. In FIG. 6B, $f^{(1)}$ represents a sent feature, a rectangular box $f_1, f_2, \ldots, f_L$ represents L-dimensional sent features of an encoder neural network on different channels, $A$ represents a parameter of a matching layer, $A_1$ is an optional action of $A$, $t$ represents a transmitted feature, $r_s$ represents a received feature in the memory buffer, and $r'$ represents a received feature of a receive end existing when a parameter that is of a matching layer on the current channel and that is obtained through computation by a transmit end is $A_1$. The transmit end may set a reward value to a degree of similarity between a received feature obtained by using a selected parameter of the matching layer and a target received feature, for example, the foregoing optimized offset target. A higher degree of similarity indicates a smaller offset error and a larger reward value. The transmit end may indicate, to the matching layer by using a feedback similar to that of the reward information, an action of selecting an optimal parameter $A$.

In implementation, an exploration-exploitation with exponential weights (EXP3) method that is commonly used to resolve a bandits problem or manners such as a hierarchical optimistic optimization (hierarchical optimistic optimization) method may be selected to implement selection of the optimal parameter of the matching

layer at $\mathrm{O}(\sqrt{NlogN})$ (where N is a total quantity of linear combinations). In a possible implementation, the transmit end may separately perform second encoding processing on the sent feature by using each parameter of the matching layer (namely, a limited quantity of parameters $A$, for example, the parameter $A_1$) recorded by the transmit end, to obtain a received feature corresponding to each parameter of the matching layer; determine, based on a degree of similarity between the received feature corresponding to each parameter of the matching layer and the target received feature, a reward obtained by selecting each parameter of the matching layer; and select a parameter of the matching layer with a largest obtained reward as the parameter of the matching layer. An example of selecting, by the transmit end, the parameter of the matching layer of the transmit end based on reinforcement learning of the stochastic bandits problem is as follows: The parameter of the matching layer of the transmit end may be any one of $A_1, A_2, \ldots$, and $A_T$. When a channel between the transmit end and the receive end changes to $h'$, the transmit end computes a received feature obtained by performing second encoding processing on the sent feature by using each of parameters $A_1, A_2, \ldots$, and $A_T$ of the matching layer as the parameter of the matching layer on the channel $h'$. If a similarity degree between a received feature obtained by performing second encoding processing on the sent feature by using a parameter $A_2$ of the matching layer on the channel $h'$ and the target received feature is higher than a similarity between a received feature obtained by performing second encoding processing on the sent feature by using any other parameter of the matching layer and the target received feature, the transmit end selects the parameter $A_2$ of the matching layer on the channel $h'$ to perform second encoding processing on the sent feature. Another example of selecting, by the transmit end, the parameter of the matching layer of the transmit end based on reinforcement learning of the stochastic bandits problem is as follows: The parameter of the matching layer of the transmit end may be any one of $A_1, A_2, \ldots$, and $A_T$, where a parameter $A_1$ indicates selection of extracting the sent feature $f$ on a channel $h_1$, a parameter $A_2$ indicates selection of extracting the sent feature $f$ on a channel $h_2$, and a parameter $A_T$ indicates selection of extracting the sent feature $f$ on a channel $h_T$. When a channel between the transmit end and the receive end changes from $h_1$ to $h_2$, the transmit end selects the parameter $A_2$ as the parameter of the matching layer to perform second encoding processing on the sent feature.

In this embodiment of this application, training of the transmit end and the receive end may be divided into two parts. One part is training an autoencoder, that is, training the encoder neural network of the transmit end and a decoder neural network of the receive end, and the other part is training the matching layer (or updating the parameter of the matching layer).

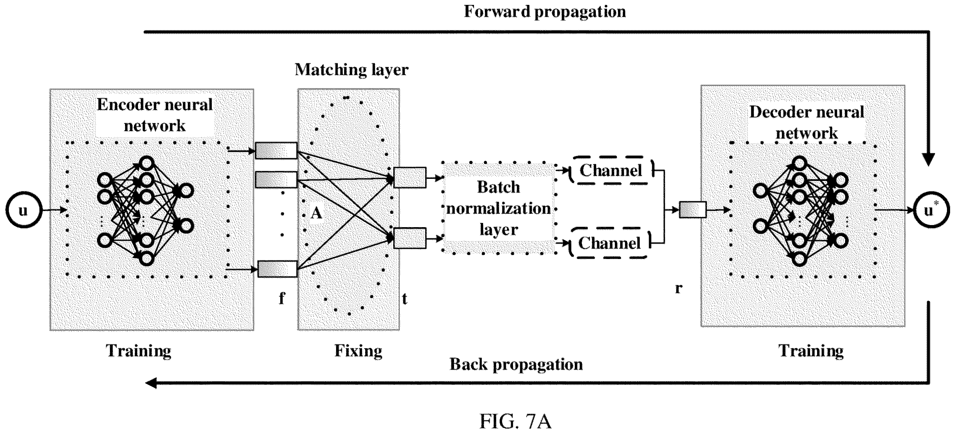

A possible implementation of training the autoencoder is as follows: The parameter $A = A_0$ of the matching layer of the transmit end is fixed, where $A_0$ is a random initial value of the matching layer. Because an operation at the matching layer is differentiable, the encoder neural network of the receive end and the transmit end and the decoder neural network of the receive end under the current channel distribution $F_{h_s}$ may be trained in any manner of training the autoencoder. FIG. 7A is a schematic diagram of a process of training an autoencoder according to an embodiment of this application. As shown in FIG. 7A, during training of the autoencoder, the parameter of the matching layer of the transmit end is fixed. A feedforward (feedforward) process is sequentially as follows: The decoder neural network of the transmit end performs first encoding processing on the sent data $u$, and outputs the sent feature $f$. The matching layer (where A in FIG. 7A represents the parameter of the matching layer) of the transmit end performs second encoding processing on the sent feature $f$, and outputs the transmitted feature $t$. Batch normalization processing (optional) is performed on the transmitted feature, and then the transmitted feature $t$ is transmitted through a channel. The receive end receives the received feature $r$ (namely, a feature that is received by the receive end and that is obtained by transmitting the transmitted feature $t$ (or the transmitted feature $t$ obtained through batch normalization processing) through a channel). The receive end performs decoding processing on the received feature $r$ by using the decoder neural network to obtain sent data $u^*$. A backpropagation process includes: The receive end computes a target function based on the sent data $u$ and the sent data $u^*$, to obtain gradient information. The receive end updates a parameter of the decoder neural network of the receive end based on the gradient information, and feeds back the gradient information to the receive end. The transmit end updates a parameter of the decoder neural network of the receive end based on the gradient information fed back by the receive end. When training of the encoder neural network of the transmit end and the decoder neural network of the receive end converges, it indicates that the autoencoder can achieve optimal performance on a given channel, and therefore an optimal received feature $r_s$ is obtained.

A possible implementation of training of the matching layer is as follows: The encoder neural network of the transmit end and the decoder neural network of the receive end are fixed (that is, the parameter of the encoder neural network of the transmit end and the parameter of the decoder neural network of the receive end are fixed). In a forward iteration process, a received feature $r_i{}'$ may be obtained through computation by using the current channel and the sent feature $f$ obtained through training of the autoencoder. The transmit end obtains the sent feature $f$ on the original channel and a received feature $r_s = h_s \circ A_0(f)$ corresponding to the sent feature $f$ from the memory buffer. The transmit end iteratively updates the parameter of the matching layer of the transmit end on the new channel, so that the updated parameter of the matching layer can adapt to the current channel, and the receive end does not need to adjust the decoder neural network. That the updated parameter of the matching layer adapts to the current channel means that the transmitted feature obtained by performing second encoding processing on the sent feature $f$ by using the updated parameter of the matching layer is transmitted through the new channel to obtain the received feature $r_s$.

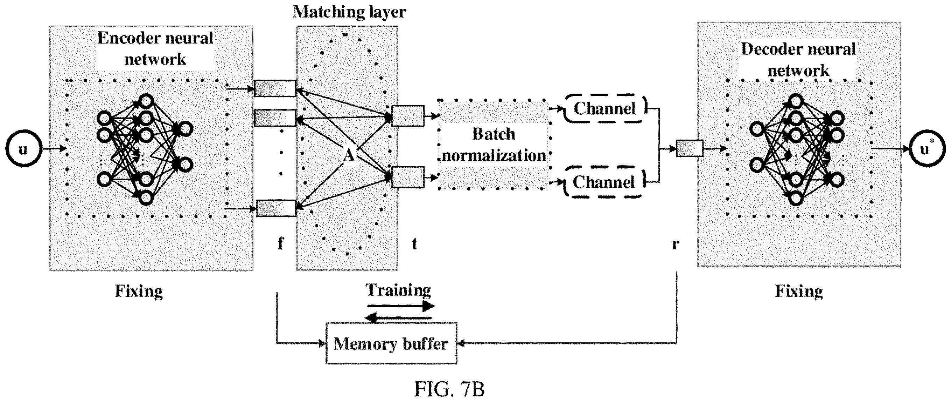

The transmit end may train the matching layer in any one of Manner 1, Manner 2, or Manner 3 provided in this embodiment of this application. A manner of obtaining the channel information by the transmit end may include: The transmit end obtains the channel information through estimation based on prior information. For example, the channel information may be obtained by performing autoregressive model channel prediction based on channel data correlation, by monitoring environment change for estimation by the transmit end by using a sensing device, or by performing estimation based on an estimation method and feeding back method of CSI. The channel information is determined based on the received feature offset fed back by the receive end, where the received feature offset is represented as a difference $\Delta r = r' - r_s$ between a received feature r' on the new channel and the fixed received feature $r_s$ obtained through autoencoder training. FIG. 7B is a schematic diagram of a process of training a matching layer according to an embodiment of this application. As shown in FIG. 7B, during training of a matching layer, an encoder neural network of a transmit end and a decoder neural network of a receive end are fixed, and the transmit end independently trains the matching layer of the transmit end. As shown in FIG. 7B, a sent feature $f$ output by the encoder neural network and a received feature r input by the decoder neural network may be recorded in a memory buffer, and the transmit end trains the matching layer of the transmit end based on the sent feature and the received feature in the memory buffer.

The following describes a communication solution described in an embodiment of this application with reference to the accompanying drawings.

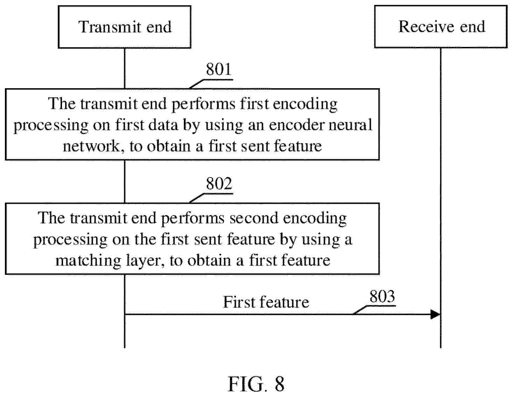

FIG. 8 is a flowchart of a communication method according to an embodiment of this application. As shown in FIG. 8, the method includes the following steps.

801: A transmit end performs first encoding processing on first data by using an encoder neural network, to obtain a first sent feature.

The first sent feature is related to a channel distribution dimension of an environment in which the transmit end is located. The encoder neural network of the transmit end and a decoder neural network of a receive end may form an autoencoder.

In a possible implementation, the first sent feature includes an L-dimensional vector related to the channel distribution dimension, L is a product of V and T, the first data is represented by at least a V-dimensional vector, T is a quantity of channel types obtained by clustering channels in a current environment, T is an integer greater than or equal to 2, and V is an integer greater than 0. A sent feature obtained by performing first encoding processing on any sent data (for example, the first data) by the transmit end by using the encoder neural network has a pre-training result for scenarios under various channel distributions in the environment in which the transmit end is located. A conventional autoencoder design only performs optimization for a specific channel, and the sent feature output by the encoder neural network of the transmit end has pre-training results for scenarios under various channel distributions in the environment in which the transmit end is located. Therefore, compared with a sent feature of the conventional autoencoder, the sent feature may alternatively be considered as a higher-order tensor obtained by adding a dimension related to a channel distribution on an original basis. For example, if a dimension of the sent feature output by a transmit end of the conventional autoencoder is V (an integer greater than 1), the dimension of the sent feature output by the encoder neural network of the transmit end in this embodiment of this application is $L = V \times T$, and T is the quantity of channel types obtained by clustering channels in the current environment.

In a possible implementation, the encoder neural network of the transmit end is obtained through training on a plurality of different channels. The encoder neural network may be considered as a stack of a plurality of independent encoder sub-networks. Each encoder sub-network is obtained by jointly training on a specific channel the encoder sub-network and a decoder neural network whose parameter is fixed, and any two encoder sub-networks are obtained through training on different specific channels. Each encoder sub-network may be considered as the encoder neural network in the conventional autoencoder. In this implementation, because the encoder neural network is obtained through training on a plurality of different channels, the encoder neural network can handle a plurality of channel conditions, that is, the encoder neural network may be applicable to the plurality of different channels. When the encoder neural network is applicable to the plurality of different channels, if a channel of the transmit end changes, the transmit end does not need to update the parameter of the encoder neural network, but only needs to update the parameter of the matching layer. The plurality of different channels may be obtained by performing clustering and division on channels in the environment in which the transmit end is currently located.

The transmit end may be an access network device, or may be a user equipment. An access network device may be any device that has a wireless transceiver function and can communicate with the user equipment, for example, a radio access network (radio access network, RAN) node that connects the user equipment to a wireless network. Currently, for example, the RAN node is a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), a wireless fidelity (wireless fidelity, Wi-Fi) access point (access point, AP), an integrated access backhaul (integrated access and backhaul, IAB), or the like. In this application, an example in which a base station is used as the access network device is used for description. The user equipment (user equipment, UE) is a device that has a wireless transceiver function. The user equipment may communicate with one or more core network (core network, CN) devices (or referred to as core devices) by using an access network device (or referred to as an access device) in a radio access network (radio access network, RAN). The user equipment may be deployed on land, for example, including an indoor user equipment, an outdoor user equipment, a handheld user equipment, or a vehicle-mounted user equipment, may be deployed on a water surface (for example, on a ship), or may be deployed in the air (for example, on an airplane, a balloon, or a satellite). In this embodiment of this application, a UE may also be referred to as a terminal device, and may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in a smart city (smart city), a wireless terminal in a smart home (smart home), or the like. Optionally, the user equipment may be a handheld device, a vehicle-mounted device, a wearable device, a terminal in the internet of things, a terminal in the internet of vehicles, a terminal in any form in a 5G network and a future network, or the like that has a wireless communication function. This is not limited in this application.

802: The transmit end performs second encoding processing on the first sent feature by using the matching layer, to obtain a first feature.

The encoder neural network and the matching layer are obtained through independent training. A dimension of the first feature is less than a dimension of the first sent feature.

In a possible implementation, that the transmit end performs second encoding processing on the first sent feature by using the matching layer meets the following formula:

$$t = A \cdot f \quad (2)$$

$t$ represents the first feature, $t = [t_1, t_2, \ldots, t_K]$, and $t_i = \sigma(\sum_l a_{l,i}f_l)$. $A$ represents the parameter of the matching layer, $A = [a_{l,i}]_{L \times K}$. $f$ represents the first sent feature, and $f = [f_1, f_2, \ldots, f_L]$.

803: The transmit end sends the first feature to the receive end.

The first feature is used by the receive end to obtain the first data.

Before the transmit end performs a method procedure in FIG. 8, the transmit end and the receive end complete training of the encoder neural network and the decoder neural network. For example, training of the encoder neural network and the decoder neural network is completed when the parameter of the matching layer of the transmit end is fixed.

In this embodiment of this application, the transmit end performs first encoding processing on the first data by using the encoder neural network, to obtain the first sent feature, and performs second encoding processing on the first sent feature by using the matching layer, to obtain the first feature. Because the encoder neural network and the matching layer are obtained through independent training, when a channel changes, adaptation to a new channel can be implemented by updating only the matching layer of the transmit end, so that overheads required for network training of the receive end are reduced. In addition, because the receive end does not need to participate in training, a requirement for a processing capability of the receive end can be reduced, so that use duration of the receive end can be prolonged.

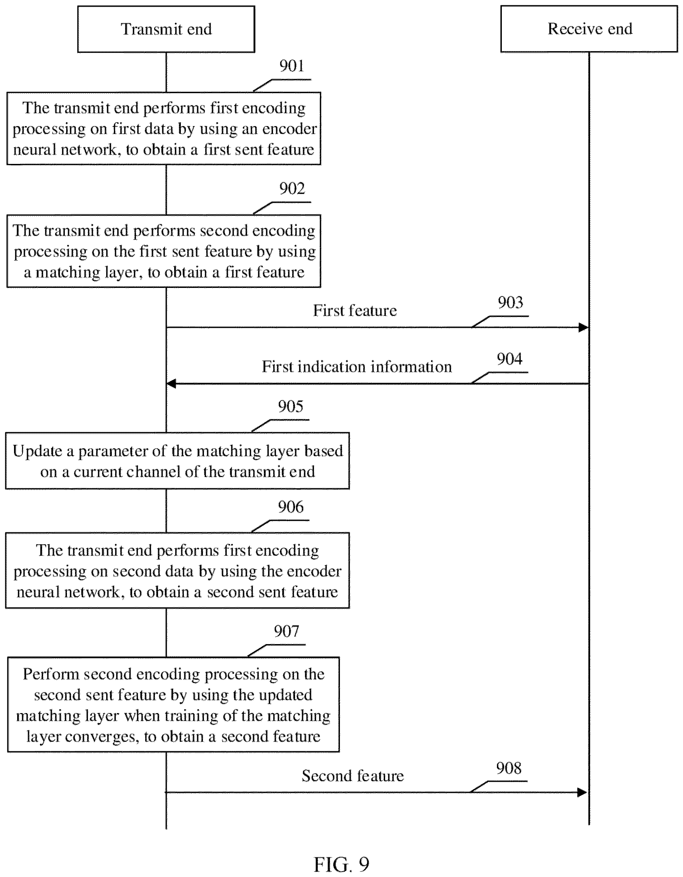

FIG. 9 is a flowchart of another communication method according to an embodiment of this application. A method procedure in FIG. 9 is a possible implementation of the method described in FIG. 8. As shown in FIG. 9, the method procedure includes the following steps.

901: A transmit end performs first encoding processing on first data by using an encoder neural network, to obtain a first sent feature.

For step 901, refer to step 801.

902: The transmit end performs second encoding processing on the first sent feature by using the matching layer, to obtain a first feature.

For step 902, refer to step 802.

903: The transmit end sends the first feature to the receive end.

For step 903, refer to step 803. Before the receive end performs step 901, step 902, and step 903, the transmit end and the receive end complete training of the encoder neural network and a decoder neural network. For example, training of the encoder neural network and the decoder neural network is completed when a parameter of the matching layer of the transmit end is fixed. The method procedure in FIG. 9 may be considered as a method procedure in which the transmit end and the receive end implement data transmission by using a trained autoencoder.

904: The transmit end receives first indication information from the receive end.

The first indication information indicates the transmit end to update the parameter of the matching layer.

905: The transmit end updates the parameter of the matching layer based on a current channel of the transmit end.

A possible implementation of step 905 is as follows: The transmit end updates the parameter of the matching layer based on the current channel of the transmit end, a third sent feature, and a third received feature. The third received feature includes a feature obtained by the receive end by receiving, on a first channel, a third feature sent by the transmit end, and the third feature includes a feature obtained by the transmit end by performing second encoding processing on the third sent feature by using the matching layer. The current channel of the transmit end is different from the first channel. The third sent feature and the third received feature are a sent feature and a received feature that are recorded in a memory buffer of the transmit end. For example, the third sent feature is the first sent feature, and the third received feature is a received feature obtained by the receive end by receiving the first feature sent by the transmit end through the first channel. The first channel may be a channel between the transmit end and the receive end when the transmit end sends the first feature. In other words, the channel between the transmit end and the receive end is originally the first channel (when the first data is sent), and changes from the first channel to the current channel after the channel changes. It may be understood that before the channel changes, the transmit end sends data (for example, the first feature) to the receive end through the first channel. The transmit end may record a sent feature and a received feature of the transmit end in a recent period of time by using the memory buffer, for example, the first sent feature and the first received feature. The first received feature is the received feature obtained by the receive end by receiving the first feature sent by the transmit end through the first channel.

The transmit end may update the parameter of the matching layer based on the current channel of the transmit end in any one of Manner 1, Manner 2, and Manner 3 described above. Details are not described herein again.

In a possible implementation, a parameter of the encoder neural network remains unchanged in a process in which the transmit end updates the parameter of the matching layer. In this implementation, only the parameter of the matching layer is updated. Because a computation amount is reduced, efficiency of updating the matching layer can be improved.

In a possible implementation, before performing step 905, the transmit end may perform the following operations: The transmit end obtains first information, and the transmit end determines the current channel of the transmit end based on the first information. The first information includes channel information or received feature offset information from the receive end, the channel information represents related information of the current channel of the transmit end, the received feature offset information represents a difference between the third received feature and a fourth received feature, the third received feature includes a feature obtained by the receive end by receiving, on the first channel, the third feature sent by the transmit end, and the fourth received feature includes a feature obtained by the receive end by receiving, on the current channel, the third feature sent by the transmit end.

In a possible implementation, before performing step 905, the transmit end performs the following operation: The transmit end estimates the current channel based on prior information. Alternatively, the transmit end monitors an environment change by using a sensing device, to estimate the current channel.

906: The transmit end performs first encoding processing on second data by using the encoder neural network, to obtain a second sent feature.

For step 906, refer to step 901.

907: The transmit end performs second encoding processing on the second sent feature by using the updated matching layer when training of the matching layer converges, to obtain a second feature.

The updated matching layer is the matching layer whose training converges. The transmit end may update the parameter of the matching layer in any one of Manner 1, Manner 2, and Manner 3 described above. Updating the parameter of the matching layer may be considered as training the matching layer. A case in which training of the matching layer converges may be that when duration of iteratively updating the parameter of the matching layer by the transmit end is less than or equal to a time threshold (for example, 5s), a loss value computed by the transmit end based on the parameter of the matching layer and the current channel is less than a loss threshold. The loss value computed by the transmit end based on the parameter of the matching layer and the current channel may represent a difference program between a received feature that is computed by the transmit end based on the parameter of the matching layer and the current channel and a target received feature. The target received feature may be a received feature that the transmit end expects to obtain through computation based on the parameter of the matching layer and the current channel, namely, an ideal received feature.

For example, the memory buffer of the transmit end records the first sent feature and the first received feature (corresponding to the first channel). The transmit end performs second encoding processing on the first sent feature by using the matching layer to obtain a feature $t$. The transmit end computes a feature that is received by the receive end and that is obtained by transmitting the feature $t$ through the current channel, to obtain a received feature $r'$. The transmit end computes a loss value between the received feature $r'$ and the first received feature (as the target received feature) based on, for example, a square error $\min_{A} \mathbb{E}\left[\left|\left|r' - r_s\right|\right|^2\right]$, a feature covariance KL divergence $\min_{A} \mathbb{E}[KL(R'||R_s)]$, and a rigidity and distance hybrid error $\min\left(\left|\left|r' - r_s\right|\right|^2 + 1 - \frac{<r_s, r'>}{||r_s||||r'||}\right)$. If the loss value is less than the loss threshold and duration of iteratively updating the parameter of the matching layer by the transmit end is less than or equal to the time threshold, the transmit end may determine that training of the matching layer converges. Updating the parameter of the matching layer may be considered as training the matching layer. A case in which training of the matching layer converges may be that when a quantity of times of iteratively updating the parameter of the matching layer by the transmit end is less than a preset quantity of times (for example, 10,000 times), a loss value computed by the transmit end based on the parameter of the matching layer and the current channel is less than a loss threshold. Alternatively, a training signal-to-noise ratio (training signal-to-noise ratio, TSNR) defined below may be used as an evaluation standard:

$$TSNR = \frac{var(r_s)}{var(L)} \quad (3)$$

When a channel signal-to-noise ratio SNR is known, it may be considered that training converges when $TSNR \geq \frac{1}{\lambda} SNR$, where $var(a) = \frac{\sum_{i=1}^{n} a_i^2}{n}$, $L$ is the loss function mentioned above, and $\lambda$ is a constant greater than 0.

908: The transmit end sends the second feature to the receive end.

The second feature is used by the receive end to obtain the second data.

In this embodiment of this application, the transmit end updates the parameter of the matching layer based on the current channel of the transmit end. Adaptation to a new channel can be implemented by updating the matching layer of the transmit end, and the encoder neural network and the decoder neural network of the receive end do not need to be updated. In this way, time overheads and signaling overheads caused by updating the encoder neural network and the decoder neural network of the receive end can be avoided.

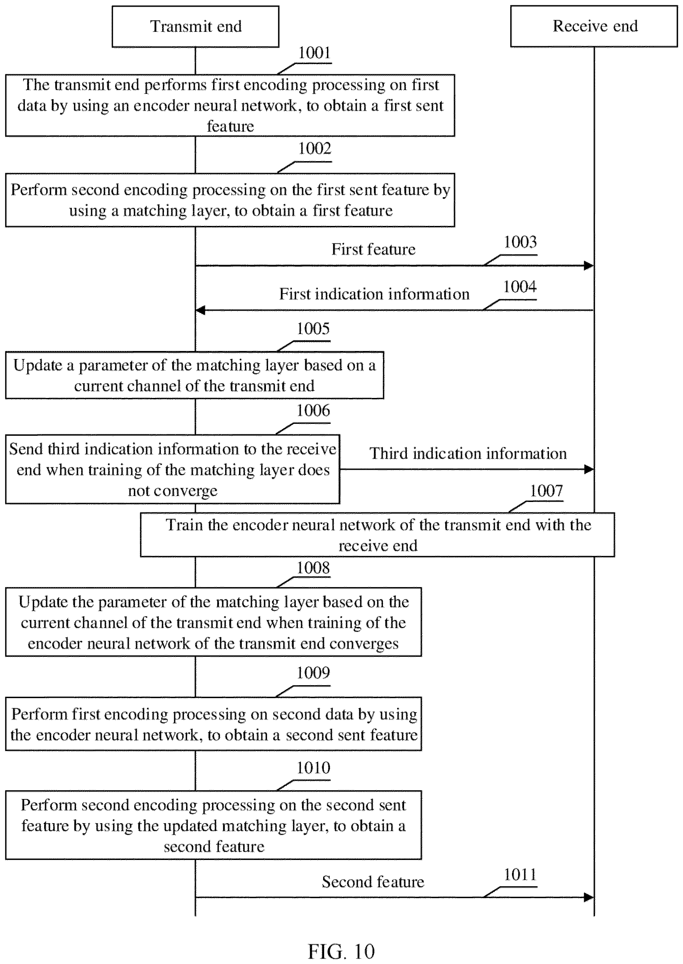

FIG. 10 is a flowchart of another communication method according to an embodiment of this application. A method procedure in FIG. 10 is a possible implementation of the method described in FIG. 8. As shown in FIG. 10, the method procedure includes the following steps.

1001: A transmit end performs first encoding processing on first data by using an encoder neural network, to obtain a first sent feature.

For step 1001, refer to step 801.

1002: The transmit end performs second encoding processing on the first sent feature by using the matching layer, to obtain a first feature.

For step 1002, refer to step 802.

1003: The transmit end sends the first feature to the receive end.

For step 1003, refer to step 803. Before the receive end performs step 1001, step 1002, and step 1003, the transmit end and the receive end complete training of the encoder neural network and a decoder neural network. For example, training of the encoder neural network and the decoder neural network is completed when a parameter of the matching layer of the transmit end is fixed.

1004: The transmit end receives first indication information from the receive end.

The first indication information indicates the transmit end to update the parameter of the matching layer. Step 1004 may be replaced with: The transmit end determines to update the parameter of the matching layer when a channel changes and a change degree of the channel is less than a change threshold. The change degree of the channel may be a covariance between the changed channel and the channel before the change, and the change threshold is set based on an actual requirement. The transmit end may determine, based on the covariance between the changed channel and the channel before the change and the change threshold, whether to update the parameter of the matching layer.

1005: The transmit end updates the parameter of the matching layer based on a current channel of the transmit end.

For step 1005, refer to step 905.

1006: The transmit end sends third indication information to the receive end when training of the matching layer does not converge.

The third indication information indicates the receive end to retrain the encoder neural network.

A case in which training of the matching layer does not converge may be that when duration of iteratively updating the parameter of the matching layer by the transmit end is greater than or equal to a time threshold (for example, 5s), a loss value computed by the transmit end based on the parameter of the matching layer and the current channel is greater than or equal to a loss threshold. A case in which training of the matching layer does not converge may be that when a quantity of times of iteratively updating the parameter of the matching layer by the transmit end is greater than or equal to a preset quantity of times (for example, 10,000 times), a loss value computed by the transmit end based on the parameter of the matching layer and the current channel is greater than or equal to a loss threshold.

1007: The transmit end and the receive end train the encoder neural network of the transmit end.

That the transmit end and the receive end train the encoder neural network of the transmit end may be: training the encoder neural network of the transmit end when a parameter of the decoder neural network of the receive end is fixed. When the parameter of the matching layer remains unchanged, the transmit end trains the encoder neural network.

1008: The transmit end updates the parameter of the matching layer based on the current channel of the transmit end when training of the encoder neural network of the transmit end converges.

A case in which training of the matching layer does not converge may be that when duration of iteratively updating the parameter of the matching layer by the transmit end is greater than or equal to a time threshold (for example, 5s), a loss value computed by the transmit end based on the parameter of the matching layer and the current channel is greater than or equal to a loss threshold. A case in which training of the matching layer does not converge may be that when a quantity of times of iteratively updating the parameter of the matching layer by the transmit end is greater than or equal to a preset quantity of times (for example, 10,000 times), a loss value computed by the transmit end based on the parameter of the matching layer and the current channel is greater than or equal to a loss threshold.

It should be understood that the transmit end may repeatedly perform step 1006 to step 1008 until training of the matching layer converges. After the transmit end performs step 1008, if training of the matching layer does not converge, the transmit end performs step 1006. If training of the matching layer converges, the transmit end performs step 1009.

1009: The transmit end performs first encoding processing on second data by using the encoder neural network, to obtain a second sent feature.

For step 1009, refer to step 801.

1010: The transmit end performs second encoding processing on the second sent feature by using the updated matching layer, to obtain the second feature.

For step 1010, refer to step 907.

1011: The transmit end sends the second feature to the receive end.

For step 1011, refer to step 908.

In this embodiment of this application, when training of the matching layer does not converge, the transmit end sends third indication information to the receive end, to indicate, by using the third indication information, the receive end to retrain the encoder neural network. After retraining the encoder neural network, the transmit end updates the parameter of the matching layer based on the current channel of the transmit end, so that training of the matching layer converges.

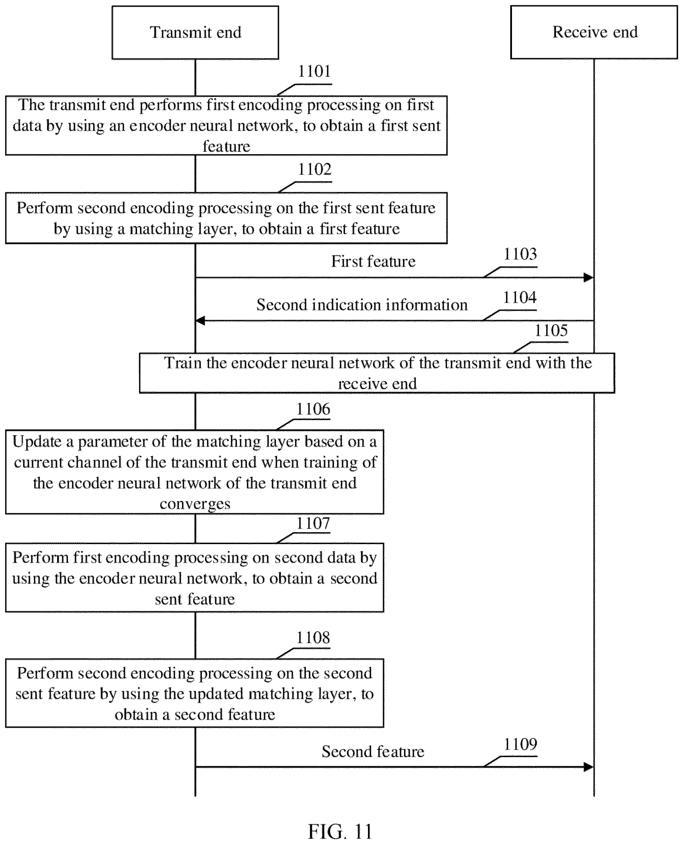

FIG. 11 is a flowchart of another communication method according to an embodiment of this application. A method procedure in FIG. 11 is a possible implementation of the method described in FIG. 8. As shown in FIG. 11, the method procedure includes the following steps.

1101: A transmit end performs first encoding processing on first data by using an encoder neural network, to obtain a first sent feature.

For step 1101, refer to step 801.

1102: The transmit end performs second encoding processing on the first sent feature by using the matching layer, to obtain a first feature.

For step 1102, refer to step 802.

1103: The transmit end sends the first feature to the receive end.

For step 1103, refer to step 803. Before the receive end performs step 1101, step 1102, and step 1103, the transmit end and the receive end complete training of the encoder neural network and a decoder neural network. For example, training of the encoder neural network and the decoder neural network is completed when a parameter of the matching layer of the transmit end is fixed.

1104: The transmit end receives second indication information from the receive end.

The second indication information indicates the transmit end to retrain the encoder neural network. Step 1104 may be replaced with: The transmit end determines to update a parameter of the encoder neural network when a channel changes and a change degree of the channel is greater than or equal to a first threshold. The change degree of the channel may be a covariance between the changed channel and the channel before the change, and the first threshold is set based on an actual requirement. The transmit end may determine, based on the covariance between the changed channel and the channel before the change and the first threshold, whether to update the parameter of the encoder neural network.

1105: The transmit end trains the encoder neural network of the transmit end with the receive end.

That the transmit end and the receive end train the encoder neural network of the transmit end may be: training the encoder neural network of the transmit end when a parameter of the decoder neural network of the receive end is fixed.

1106: The transmit end updates the parameter of the matching layer based on the current channel of the transmit end when training of the encoder neural network of the transmit end converges.

For step 1106, refer to step 1008. After the transmit end performs step 1106, if training of the matching layer does not converge, the transmit end may perform step 1105 and step 1106 for a plurality of times until training of the matching layer converges. If training of the matching layer converges, the transmit end performs step 1107.

1107: The transmit end performs first encoding processing on second data by using the encoder neural network, to obtain a second sent feature.

For step 1107, refer to step 801.

1108: The transmit end performs second encoding processing on the second sent feature by using the updated matching layer, to obtain the second feature.

For step 1108, refer to step 907.

1109: The transmit end sends the second feature to the receive end.

For step 1109, refer to step 908.

In this embodiment of this application, after receiving the second indication information from the receive end, the transmit end trains the encoder neural network of the transmit end with the receive end. When training of the encoder neural network converges, the transmit end updates the parameter of the matching layer based on the current channel of the transmit end, so that an encoder neural network and a matching layer that are applicable to the current channel can be trained more quickly.

FIG. 8 to FIG. 11 describe a method procedure performed by a transmit end in a communication solution provided in this application. The following describes a method procedure performed by a receive end in a communication solution provided in this application with reference to the accompanying drawings.

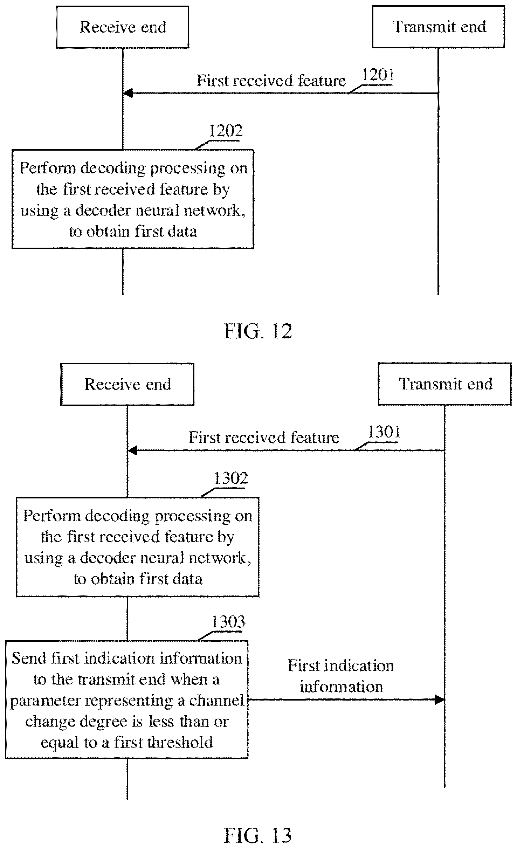

FIG. 12 is a flowchart of a communication method according to an embodiment of this application. As shown in FIG. 12, the method includes the following steps.

1201: A receive end receives a first received feature from a transmit end.

The first received feature includes a feature that is received by the receive end and that is obtained by transmitting, through a channel, a first feature sent by the transmit end. The first feature is obtained by the transmit end by performing encoding processing on a first sent feature by using a matching layer, and the first sent feature is obtained by an encoder neural network of the transmit end by performing encoding processing on first data. The encoder neural network and the matching layer are obtained through independent training.

The receive end may be an access network device, or may be a user equipment.

1202: The receive end performs decoding processing on the first received feature by using a decoder neural network, to obtain the first data.

The decoder neural network and the matching layer are obtained through independent training. Before the receive end performs a method procedure in FIG. 12, the transmit end and the receive end complete training of the encoder neural network and the decoder neural network. For example, training of the encoder neural network and the decoder neural network is completed when a parameter of the matching layer of the transmit end is fixed.

In this embodiment of this application, because the decoder neural network and the matching layer are obtained through independent training, and the encoder neural network and the matching layer are obtained through independent training, when a channel between the transmit end and the receive end changes, adaptation to a new channel can be implemented by updating only the matching layer of the transmit end, so that overheads required for network training of the receive end are reduced. In addition, because the receive end does not need to participate in training, a requirement for a processing capability of the receive end can be reduced, so that use duration of the receive end can be prolonged.

FIG. 13 is a flowchart of another communication method according to an embodiment of this application. A method procedure in FIG. 13 is a possible implementation of the method described in FIG. 12. As shown in FIG. 13, the method procedure includes the following steps.

1301: A receive end receives a first received feature from a transmit end.

For step 1301, refer to step 1201.

1302: The receive end performs decoding processing on the first received feature by using a decoder neural network, to obtain the first data.

For step 1302, refer to step 1202. Before the receive end performs step 1301 and step 1302, the transmit end and the receive end complete training of an encoder neural network and the decoder neural network.

1303: The receive end sends first indication information to the transmit end when a parameter representing a channel change degree is less than or equal to a first threshold.

The first indication information indicates the transmit end to update a parameter of a matching layer.

In a possible implementation, the receive end periodically detects a channel change. The parameter representing the channel change degree may be a covariance between channels. For example, the receive end detects a covariance between a current channel and a last detected channel at an interval of 10 ms. If it is detected that the covariance between the current channel and the last detected channel is greater than a second threshold and less than the first threshold, the receive end sends the first indication information to the transmit end, where the second threshold is less than the first threshold, and both the first threshold and the second threshold are real numbers that are set based on an actual requirement and that are greater than 0.

In a possible implementation, the receive end may further perform the following operation: sending first information to the transmit end, where the first information is used by the transmit end to update the parameter of the matching layer. The first information includes channel information or received feature offset information from the receive end, the channel information represents related information of the current channel of the transmit end, the received feature offset information represents a difference between a third received feature and a fourth received feature, the third received feature includes a feature obtained by the receive end by receiving, on a first channel, a third feature sent by the transmit end, and the fourth received feature includes a feature obtained by the receive end by receiving, on the current channel, the third feature sent by the transmit end.

In a possible implementation, before sending the first indication information to the transmit end, the receive end may perform the following operation: The receive end receives fourth indication information from the transmit end, where the fourth indication information indicates that training of the encoder neural network is completed.

In this embodiment of this application, when the parameter representing the channel change degree is less than or equal to the first threshold, the receive end sends the first indication information to the transmit end, so that the transmit end is indicated in a timely manner to update the parameter of the matching layer. In this way, data transmission can still be successfully completed after the channel changes.

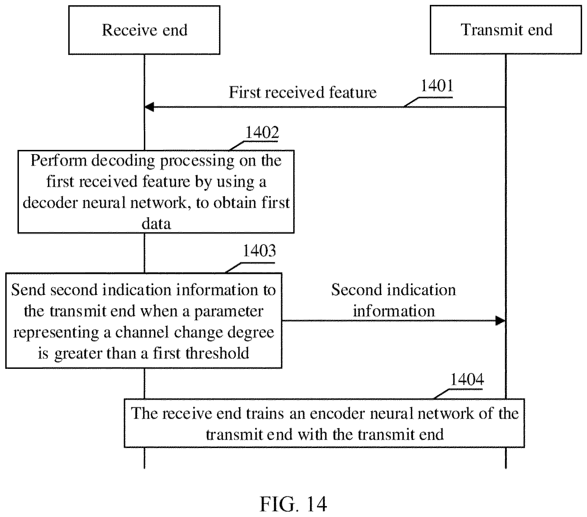

FIG. 14 is a flowchart of another communication method according to an embodiment of this application. A method procedure in FIG. 14 is a possible implementation of the method described in FIG. 12. As shown in FIG. 14, the method procedure includes the following steps.

1401: A receive end receives a first received feature from a transmit end.

For step 1401, refer to step 1201.

1402: The receive end performs decoding processing on the first received feature by using a decoder neural network, to obtain the first data.

For step 1402, refer to step 1202.

1403: The receive end sends second indication information to the transmit end when a parameter representing a channel change degree is greater than a first threshold.

The second indication information indicates the transmit end to retrain the encoder neural network. Before the receive end performs step 1401, step 1402, and step 1403, the transmit end and the receive end complete training of the encoder neural network and the decoder neural network. For example, training of the encoder neural network and the decoder neural network is completed when a parameter of a matching layer of the transmit end is fixed.

In a possible implementation, the receive end periodically detects a channel change. The parameter representing the channel change degree may be a covariance between channels. For example, the receive end detects a covariance between a current channel and a last detected channel at an interval of 10 ms. If it is detected that the covariance between the current channel and the last detected channel is greater than the first threshold, the receive end sends the second indication information to the transmit end, where the first threshold is a real number that is set based on an actual requirement and that is greater than 0.

1404: The receive end trains the encoder neural network of the transmit end with the transmit end.

That the receive end trains the encoder neural network of the transmit end with the transmit end may be: training the encoder neural network of the transmit end on the current channel when a parameter of the decoder neural network is fixed.

In this embodiment of this application, the receive end sends the second indication information to the transmit end when the parameter representing the channel change degree is greater than the first threshold, to indicate the transmit end to retrain the encoder neural network. This can resolve a problem that data transmission cannot be successfully completed on a new channel by updating only the parameter of the matching layer.

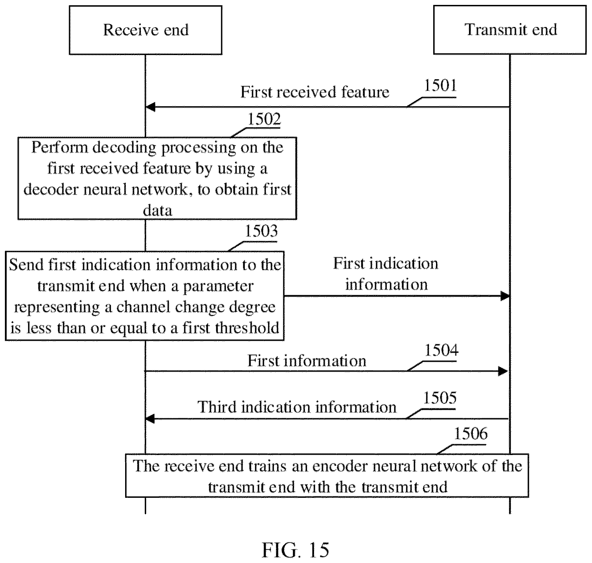

FIG. 15 is a flowchart of another communication method according to an embodiment of this application. A method procedure in FIG. 15 is a possible implementation of the method described in FIG. 12. As shown in FIG. 15, the method procedure includes the following steps.

1501: A receive end receives a first received feature from a transmit end.

For step 1501, refer to step 1201.

1502: The receive end performs decoding processing on the first received feature by using a decoder neural network, to obtain first data.

For step 1502, refer to step 1202. Before the receive end performs step 1501 and step 1502, the transmit end and the receive end complete training of an encoder neural network and the decoder neural network.

1503: The receive end sends first indication information to the transmit end when a parameter representing a channel change degree is less than or equal to a first threshold.

For step 1503, refer to step 1302.

1504: The receive end sends first information to the transmit end.

The first information is used by the transmit end to update a parameter of a matching layer. The first information includes channel information or received feature offset information from the receive end, the channel information represents related information of a current channel of the transmit end, the received feature offset information represents a difference between a third received feature and a fourth received feature, the third received feature includes a feature obtained by the receive end by receiving, on a first channel, a third feature sent by the transmit end, and the fourth received feature includes a feature obtained by the receive end by receiving, on the current channel, the third feature sent by the transmit end.

Step 1501 is optional. The transmit end may update the parameter of the matching layer based on the first information from the receive end, or may update the parameter of the matching layer in another manner (without using the first information). For example, the transmit end estimates the current channel based on prior information.

1505: The receive end receives third indication information from the transmit end.

The third indication information indicates the receive end to retrain the encoder neural network.

1506: The receive end trains the encoder neural network of the transmit end with the transmit end.

For step 1506, refer to step 1404.

In this embodiment of this application, when the parameter representing the channel change degree is less than or equal to the first threshold, the receive end sends the first indication information to the transmit end, so that the transmit end can update the parameter of the matching layer in a timely manner, to ensure that data is successfully transmitted. After receiving the third indication information from the transmit end, the receive end trains the encoder neural network of the transmit end with the transmit end. This can resolve a problem that data transmission cannot be successfully completed on a new channel by updating only the parameter of the matching layer.

FIG. 8 to FIG. 11 describe a method procedure performed by a transmit end after training of an autoencoder is completed. FIG. 12 to FIG. 15 describe a method procedure performed by a receive end after training of an autoencoder is completed. The following describes a method procedure in which a transmit end and a receive end first train an autoencoder and then train a matching layer with reference to the accompanying drawings.

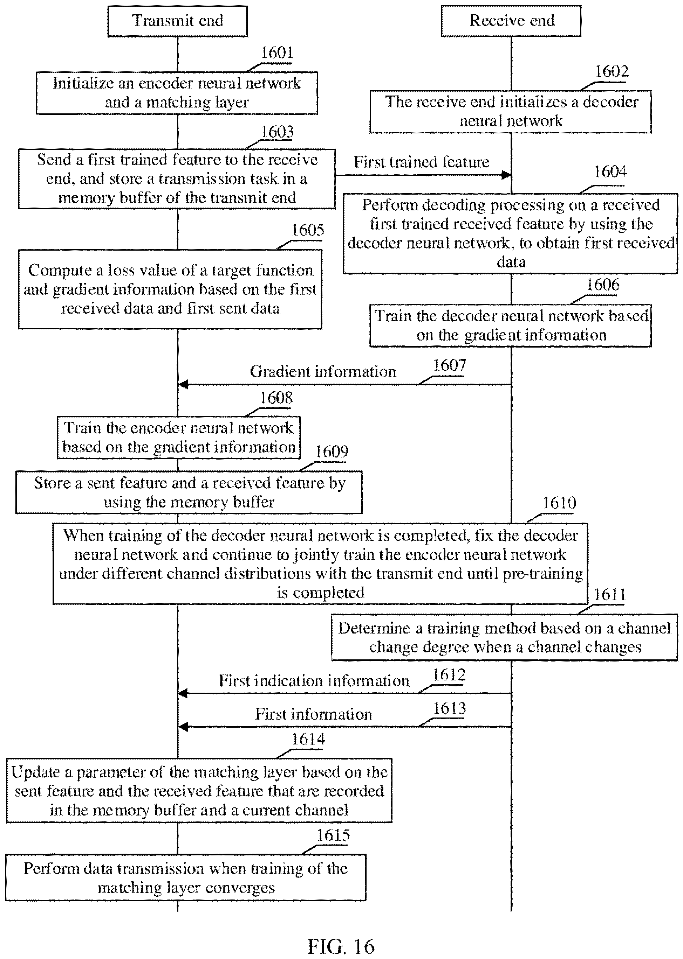

FIG. 16 is a flowchart of another communication method according to an embodiment of this application. The method in FIG. 16 describes a training process of one transmit end and one receive end and signaling interaction between the one transmit end and the one receive end (namely, one transmit end and one receive end). As shown in FIG. 16, the method includes the following steps.

1601: A transmit end initializes an encoder neural network and a matching layer.

The transmit end may initialize a parameter of the matching layer of the transmit end based on a channel distribution dimension. For example, if clustering is performed on channels in a current environment to determine a channel distribution dimension $T$, an initial value of the parameter of the matching layer $A = [a_{l,i}]_{L \times K}$ is

$$a_{l,i} = \frac{1}{T}$$

defined as . Alternatively, the parameter of the matching layer of the transmit end may be randomly initialized. The transmit end may initialize a parameter of the encoder neural network of the transmit end in any manner. This is not limited in this application.

1602: A receive end initializes a decoder neural network.

The receive end may initialize a parameter of the decoder neural network of the receive end in any manner. This is not limited in this application. A sequence of step 1601 and step 1602 is not limited.

1603: The transmit end sends a first trained feature to the receive end, and stores a transmission task in a memory buffer of the transmit end.

A possible implementation of step 1603 is as follows: The transmit end performs first encoding processing on first sent data by using the encoder neural network, to obtain a first trained sent feature. The transmit end performs second encoding processing on the first trained sent feature by using the matching layer, to obtain a first trained feature. The transmit end sends the first trained feature to the receive end. The transmit end stores, in the memory buffer of the transmit end, the transmission task of sending the first sent data. For example, the transmit end stores the first trained feature by using the memory buffer.

1604: The receive end performs decoding processing on a received first trained received feature by using the decoder neural network, to obtain first received data.

The first trained received feature is a feature that is received by the receive end and that is obtained by transmitting the first trained feature through a channel.

1605: The receive end computes a loss value of a target function and gradient information based on the first received data and the first sent data.

The receive end may prestore the first sent data (namely, trained data). The target function may be a mean square error

$$min\, L = \frac{1}{N}\sum_i (\hat{u}_i - u_i)^2$$

, a binary cross entropy

$$min\, L = -\frac{1}{N}\sum_i \sum_c u_{ic} \log(p_{ic})$$

, or the like. N is a quantity of training batches, $u_i$ and $\hat{u}_i$ are the first sent data of the transmit end and the first received data decoded by the receive end respectively. $p_{ic}$ is a prediction probability that decoded data i belongs to a category c, and $u_{ic}$ is a category sign function (0 or 1).

1606: The receive end trains the decoder neural network based on the gradient information.

1607: The receive end feeds back the gradient information to the transmit end.

Optionally, the receive end may further feed back channel information $\Delta h_d$ to the transmit end. If the transmit end is capable of obtaining $\Delta h_d$ in a sensing or channel prediction manner, the receive end does not need to perform a feedback operation. A purpose of feeding back the channel information by the receive end is to enable the transmit end to perform training in the channel distribution dimension T. Statistical clustering analysis on the current channel is performed, to obtain an approximate channel distribution. The dimension T is determined and training is performed on a channel in each dimension.

1608: The transmit end trains the encoder neural network based on the gradient information.

The transmit end and the receive end may repeatedly perform step 1603 to step 1608 until the loss value that is obtained through computation and that is of the target function is less than or equal to a loss threshold. In other words, the transmit end and the receive end may perform training on a same channel by using different trained data, until the loss value that is obtained through computation by the receive end and that is of the target function is less than or equal to the loss threshold.

1609: The transmit end stores the sent feature and the received feature by using the memory buffer.

The memory buffer may store data by using a first in first out queue, and the transmit end may track the sent feature and the received feature at any time by using the memory buffer to update the trained data.

1610: When training of the decoder neural network is completed, the receive end fixes the decoder neural network and continues to jointly train the encoder neural network under different channel distributions with the transmit end until pre-training is completed.

It may be understood that, if the loss value that is obtained through computation and that is of the target function is less than or equal to the loss threshold when the receive end trains the encoder neural network under a specific channel distribution, the receive end continues to train the encoder neural network under a next channel distribution.

Step 1601 to step 1610 are steps of training an autoencoder by the transmit end and the receive end. In other words, the transmit end and the receive end complete training of the autoencoder under different channel distributions by performing step 1601 to step 1610.

1611: The receive end determines a training method based on a channel change degree when a channel changes.

A possible implementation of step 1611 is as follows: If a parameter representing the channel change degree is less than or equal to a first threshold, the receive end indicates the transmit end to retrain the encoder neural network on the current channel. Otherwise, the receive end indicates the transmit end to update the parameter of the matching layer.

1612: The receive end sends first indication information to the transmit end.

The first indication information indicates the transmit end to update the parameter of the matching layer. For step 1612, refer to step 1503.

1613: The receive end sends first information to the transmit end.

For step 1613, refer to step 1504.

1614: The transmit end updates the parameter of the matching layer based on the sent feature and the received feature that are recorded in the memory buffer and the current channel.

The transmit end may update the parameter of the matching layer based on the sent feature and the received feature that are recorded in the memory buffer and the current channel in any one of Manner 1, Manner 2, and Manner 3 described above. For example, the transmit end may sample a training set $D = \{f, r\}$, and use r as a target received feature. An estimated received feature is obtained by using the matching layer and the channel based on $f$, to resolve an offset target optimization problem $\min_{A} \mathbb{E}[D(r', r_s)]$. The transmit end may obtain an optimal parameter of the matching layer by using an iterative method.

1615: The transmit end performs data transmission when training of the matching layer converges.

Step 1615 may be replaced with: The transmit end sends third indication information to the receive end when training of the matching layer does not converge. The third indication information indicates the receive end to retrain the encoder neural network.

In this embodiment of this application, the autoencoder is first trained, and then the matching layer is trained. When the channel changes, only the parameter of the matching layer needs to be updated, so that communication overheads can be reduced.

The following simulates training of a transceiver in a time-varying channel scenario, that is, training of the transmit end and the receive end.

It is set that a modulation order is B = 4, and a length of the trained data sent by the transmit end is K = 256. When an SNR is fixed, an Autoencoder neural network (namely, the encoder neural network and the decoder neural network) on a specific channel $h_s$ is first trained, and the Autoencoder neural network is used as a baseline (baseline), and then a channel $h_t = h_0 + \Delta h_d$ is changed at an interval of 200 times of transmission during data testing, where $\Delta h_d \sim CN(0, 0.3)$.

The matching layer is iteratively updated, so that performance on the time-varying fading channel can reach same performance as performance on a specific channel $h_s$.

In addition, time consumption of the communication method provided in this application and time consumption of retraining the autoencoder of the transmit end and the receive end are compared. As shown in Table 1, iterative updating of the matching layer may adjust the current channel within a shorter time.

**Table 1**

| Method | AE | Ada_Enc |
|---|---|---|
| Training time | 30.8688 | 2.8119 |
| SER | 0.00351 | 0.002310 |

In a same test scenario, when the time-varying channel changes at an interval of 100 steps, compared with an existing channel equalization operation at the receive end, this solution can achieve a better effect at the transmit end.

The solution is different from an operation that depends on j oint training of the transmit end and the receive end in that only the transmit end needs to adaptively adjust an environment. This reduces training overheads of the receive end, reduces a requirement for a processing capability of the receive end device, and prolongs use duration of the receive end device.

If there are a plurality of receive ends in a same scenario, and statuses of channels between different receive ends and the transmit end are seen as different, the communication solution provided in this application may be switched for implementation as a selection of the transmit end for the different receive ends, so that a network of each receive end does not need to be frequently trained. Based on a capability of a matching layer of a neural network of a transmit end to extract channel features in a plurality of scenarios, the matching layer performs adaptive adjustment based on a received feature offset or channel information, such as CSI, fed back by the transmit end, to select a transmit end feature corresponding to a receive end that currently communicates with the transmit end, to perform communication transmission.

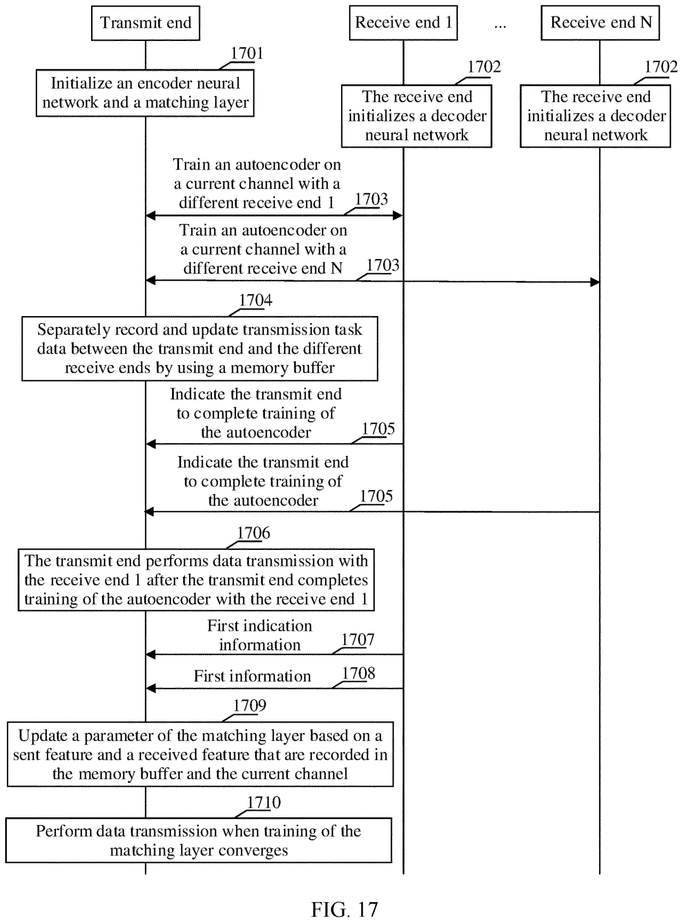

FIG. 17 is a flowchart of another communication method according to an embodiment of this application. The method in FIG. 17 describes a training process of one transmit end and a plurality of receive ends and signaling interaction between the one transmit end and the plurality of receive ends (namely, one transmit end and a plurality of receive ends). As shown in FIG. 17, the method includes the following steps.

1701: A transmit end initializes an encoder neural network and a matching layer.

For step 1701, refer to step 1601.

1702: A receive end initializes a decoder neural network.

For step 1702, refer to step 1602.

1703: The transmit end separately trains an autoencoder on a current channel with different receive ends.

For example, the transmit end and a receive end 1 train the encoder neural network of the transmit end and a decoder neural network of the receive end 1, and the transmit end and a receive end 2 train the encoder neural network of the transmit end and a decoder neural network of the receive end 2.

1704: The transmit end separately records and updates transmission task data between the transmit end and the different receive ends by using a memory buffer.

The transmission task data may include a sent feature of the transmit end and a received feature of the receive end.

1705: The receive end indicates the transmit end to complete training of the autoencoder when a loss value of a target function obtained through computation by the receive end is less than or equal to a loss threshold.

1706: The transmit end performs data transmission with the receive end 1 after the transmit end completes training of the autoencoder with the receive end 1.

It may be understood that, after completing training of autoencoder with any receive end, the transmit end may perform data transmission with the any receive end.

1707: The receive end 1 sends first indication information to the transmit end.

For step 1707, refer to step 1503.

1708: The receive end 1 sends first information to the transmit end.

For step 1708, refer to step 1504.

1709: The transmit end updates a parameter of the matching layer based on the sent feature and the received feature that are recorded in the memory buffer and the current channel.

1710: The transmit end performs data transmission when training of the matching layer converges.

The transmit end sends communication data by using the encoder neural network and the updated matching layer, and the receive end decodes data by using an original decoder neural network.

In this embodiment of this application, the autoencoder is first trained, and then the matching layer is trained. When the channel changes, only the parameter of the matching layer needs to be updated, so that communication overheads can be reduced.

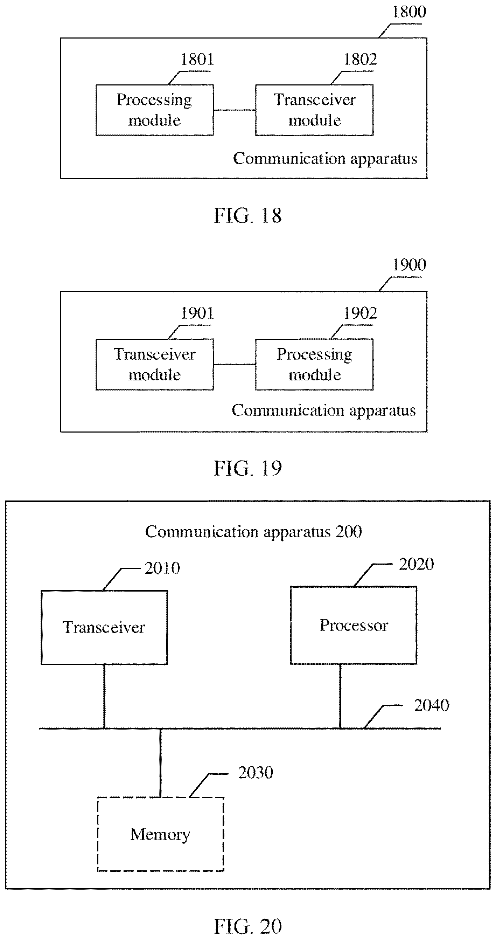

FIG. 18 is a schematic diagram of a structure of a communication apparatus according to an embodiment of this application. A communication apparatus in FIG. 18 may be the transmit end in the foregoing embodiment. As shown in FIG. 18, the communication apparatus 1800 includes a processing module 1801 and a transceiver module 1802.

The processing module 1801 is configured to perform first encoding processing on first data by using an encoder neural network, to obtain a first sent feature, where the first sent feature is related to a channel distribution dimension of an environment in which a transmit end is located.

The processing module 1801 is further configured to perform second encoding processing on the first sent feature by using a matching layer, to obtain a first feature, where the encoder neural network and the matching layer are obtained through independent training, and a dimension of the first feature is less than a dimension of the first sent feature.

The transceiver module 1802 is configured to send the first feature to a receive end, where the first feature is used by the receive end to obtain the first data.

In a possible implementation, the processing module 1801 is specifically configured to update a parameter of the matching layer based on a current channel of the processing module, is further configured to perform first encoding processing on second data by using the encoder neural network, to obtain a second sent feature, and is further configured to perform second encoding processing on the second sent feature by using the updated matching layer, to obtain a second feature. The transceiver module is further configured to send the second feature to the receive end, where the second feature is used by the receive end to obtain the second data.

In a possible implementation, the transceiver module 1802 is further configured to receive first indication information from the receive end, where the first indication information indicates the transmit end to update the parameter of the matching layer.

In a possible implementation, the processing module 1801 is specifically configured to update the parameter of the matching layer based on the current channel of the processing module, a third sent feature, and a third received feature, where the third received feature includes a feature obtained by the receive end by receiving, on a first channel, a third feature sent by the transmit end, the third feature includes a feature obtained by the transmit end by performing second encoding processing on the third sent feature by using the matching layer, and the current channel of the transmit end is different from the first channel.

In a possible implementation, the processing module 1801 is further configured to obtain first information and determine the current channel of the transmit end based on the first information.

In a possible implementation, the processing module 1801 is further configured to train the encoder neural network when the parameter of the matching layer remains unchanged.

In a possible implementation, the transceiver module 1802 is further configured to receive second indication information from the receive end, where the second indication information indicates the transmit end to retrain the encoder neural network.

In a possible implementation, the transceiver module 1802 is further configured to send third indication information to the receive end when training of the matching layer does not converge, where the third indication information indicates the receive end to retrain the encoder neural network.

FIG. 19 is a schematic diagram of a structure of another communication apparatus according to an embodiment of this application. A communication apparatus in FIG. 19 may be the receive end in the foregoing embodiment. As shown in FIG. 19, the communication apparatus 1900 includes a transceiver module 1901 and a processing module 1902.

The transceiver module 1901 is configured to receive a first received feature from a transmit end, where the first received feature includes a feature that is received by a receive end and that is obtained by transmitting, through a channel, a first feature sent by the transmit end, the first feature is obtained by the transmit end by performing encoding processing on a first sent feature by using a matching layer, the first sent feature is obtained by an encoder neural network of the transmit end by performing encoding processing on first data, and the encoder neural network and the matching layer are obtained through independent training.

The processing module 1902 is configured to perform decoding processing on the first received feature by using a decoder neural network, to obtain the first data, where the decoder neural network and the matching layer are obtained through independent training.

In a possible implementation, the transceiver module 1901 is further configured to send first indication information to the transmit end, where the first indication information indicates the transmit end to update a parameter of the matching layer.

In a possible implementation, the transceiver module 1901 is specifically configured to send the first indication information to the transmit end when a parameter representing a channel change degree is less than or equal to a first threshold.

In a possible implementation, the transceiver module 1901 is further configured to send second indication information to the transmit end when the parameter representing the channel change degree is greater than the first threshold, where the second indication information indicates the transmit end to retrain the encoder neural network.

In a possible implementation, the transceiver module 1901 is further configured to receive third indication information from the transmit end, where the third indication information indicates the receive end to retrain the encoder neural network.

In a possible implementation, the transceiver module 1901 is further configured to receive fourth indication information from the transmit end, where the fourth indication information indicates that training of the encoder neural network is completed.

In a possible implementation, the transceiver module 1901 is further configured to send first information to the transmit end, where the first information is used by the transmit end to update the parameter of the matching layer.

FIG. 20 is a schematic diagram of a structure of another communication apparatus 200 according to an embodiment of this application. A communication apparatus in FIG. 20 may be the foregoing transmit end. A communication apparatus in FIG. 20 may be the foregoing receive end.

As shown in FIG. 20, the communication apparatus 200 includes at least one processor 2020 and a transceiver 2010.

In some embodiments of this application, the processor 2020 and the transceiver 2010 may be configured to perform a function, an operation, or the like performed by the foregoing transmit end. For example, the processor 2020 may perform one or more of the following operations: step 801 and step 802 in FIG. 8, step 901, step 902, step 905, step 906, and step 907 in FIG. 9, step 1001, step 1002, step 1005, step 1007, step 1008, step 1009, and step 1010 in FIG. 10, and step 1101, step 1102, step 1105, step 1106, step 1107, and step 1108 in FIG. 11. The transceiver 2010 may perform one or more of the following operations: step 803 in FIG. 8, step 903, step 904, and step 908 in FIG. 9, step 1003, step 1004, step 1006, and step 1011 in FIG. 10, and step 1103, step 1104, and step 1109 in FIG. 11.

In some other embodiments of this application, the processor 2020 and the transceiver 2010 may be configured to perform a function, an operation, or the like performed by the foregoing receive end. The processor 2020 may perform one or more of the following operations: step 1202 in FIG. 12, step 1302 in FIG. 13, step 1402 and step 1404 in FIG. 14, and step 1502 and step 1506 in FIG. 15. The transceiver 2010 may perform one or more of the following operations: step 1201 in FIG. 12, step 1301 and step 1303 in FIG. 13, step 1401 and step 1403 in FIG. 14, and step 1501, step 1503, step 1504, and step 1505 in FIG. 15.

The transceiver 2010 is configured to communicate with another device or apparatus through a transmission medium. The processor 2020 receives and sends data and/or signals through the transceiver 2010, and is configured to implement the method in the foregoing method embodiments. The processor 2020 may implement a function of a processing module 1801, and the transceiver 2010 may implement a function of a transceiver module 1802.

Optionally, the communication apparatus 200 may further include at least one memory 2030, configured to store program instructions and/or data. The memory 2030 is coupled to the processor 2020. The coupling in this embodiment of this application may be an indirect coupling or a communication connection between apparatuses, units, or modules in an electrical form, a mechanical form, or another form, and is used for information exchange between the apparatuses, the units, or the modules. The processor 2020 may cooperate with the memory 2030. The processor 2020 may execute the program instructions stored in the memory 2030. At least one of the at least one memory may be included in the processor.

A specific connection medium between the transceiver 2010, the processor 2020, and the memory 2030 is not limited in this embodiment of this application. In this embodiment of this application, the memory 2030, the processor 2020, and the transceiver 2010 are connected through a bus 2040 in FIG. 20. The bus is represented by using a bold line in FIG. 20. A manner of connection between other components is merely an example for description, and imposes no limitation. The bus may be classified into an address bus, a data bus, a control bus, and the like. For ease of representation, only one bold line is used in FIG. 20 to represent the bus, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

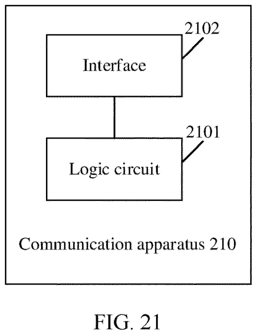

FIG. 21 is a schematic diagram of a structure of another communication apparatus 210 according to an embodiment of this application. As shown in FIG. 21, a communication apparatus shown in FIG. 21 includes a logic circuit 2101 and an interface 2102. The processing module 1801 in FIG. 18 may be implemented by using the logic circuit 2101, and the transceiver module 1802 in FIG. 18 may be implemented by using the interface 2102. The processing module 1902 in FIG. 19 may be implemented by using the logic circuit 2101, and the transceiver module 1901 in FIG. 19 may be implemented by using the interface 2102. The logic circuit 2101 may be a chip, a processing circuit, an integrated circuit, a system-on-chip (system on chip, SoC) chip, or the like, and the interface 2102 may be a communication interface, an input/output interface, or the like. In this embodiment of this application, the logic circuit and the interface may further be coupled to each other. A specific manner of connection between the logic circuit and the interface is not limited in this embodiment of this application.

In some embodiments of this application, the logic circuit and the interface may be configured to perform a function, an operation, or the like performed by the foregoing transmit end.

In some other embodiments of this application, the logic circuit and the interface may be configured to perform a function, an operation, or the like performed by the foregoing receive end.

This application further provides a computer-readable storage medium. The computer-readable storage medium stores computer code. When the computer code is run on a computer, the computer is enabled to perform the method in the foregoing embodiment.

This application further provides a computer program product. The computer program product includes computer code or a computer program. When the computer code or the computer program is run on a computer, the communication method in the foregoing embodiments is performed.

This application further provides a communication system that includes the foregoing receive end and the foregoing transmit end.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   performing, by a transmit end, first encoding processing on first data by using an encoder neural network, to obtain a first sent feature, wherein the first sent feature is related to a channel distribution dimension of an environment in which the transmit end is located;
   performing, by the transmit end, second encoding processing on the first sent feature by using a matching layer, to obtain a first feature, wherein the encoder neural network and the matching layer are obtained through independent training, and a dimension of the first feature is less than a dimension of the first sent feature; and
   sending, by the transmit end, the first feature to a receive end, wherein the first feature is used by the receive end to obtain the first data.

2. The method according to claim 1, wherein the method further comprises:

   updating, by the transmit end, a parameter of the matching layer based on a current channel of the transmit end;
   performing, by the transmit end, first encoding processing on second data by using the encoder neural network, to obtain a second sent feature;
   performing, by the transmit end, second encoding processing on the second sent feature by using the updated matching layer, to obtain a second feature; and
   sending, by the transmit end, the second feature to the receive end, wherein the second feature is used by the receive end to obtain the second data.

3. The method according to claim 2, wherein before the updating, by the transmit end, a parameter of the matching layer, the method further comprises:
   receiving, by the transmit end, first indication information from the receive end, wherein the first indication information indicates the transmit end to update the parameter of the matching layer.

4. The method according to claim 2, wherein a parameter of the encoder neural network remains unchanged in a process in which the transmit end updates the parameter of the matching layer.

5. The method according to any one of claims 2 to 4, wherein the updating, by the transmit end, a parameter of the matching layer based on a current channel of the transmit end comprises:
updating, by the transmit end, the parameter of the matching layer based on the current channel of the transmit end, a third sent feature, and a third received feature, wherein the third received feature comprises a feature obtained by the receive end by receiving, on a first channel, a third feature sent by the transmit end, the third feature comprises a feature obtained by the transmit end by performing second encoding processing on the third sent feature by using the matching layer, and the current channel of the transmit end is different from the first channel.

6. The method according to claim 5, wherein before the updating, by the transmit end, the parameter of the matching layer based on the current channel of the transmit end, the method further comprises:

obtaining, by the transmit end, first information; and
determining, by the transmit end, the current channel of the transmit end based on the first information.

7. The method according to claim 6, wherein the first information comprises channel information or received feature offset information from the receive end; and the channel information represents related information of the current channel of the transmit end, the received feature offset information represents a difference between the third received feature and a fourth received feature, the third received feature comprises the feature obtained by the receive end by receiving, on the first channel, the third feature sent by the transmit end, and the fourth received feature comprises a feature obtained by the receive end by receiving, on the current channel, the third feature sent by the transmit end.

8. The method according to any one of claims 1 to 7, wherein the first sent feature comprises an L-dimensional vector related to the channel distribution dimension, L is a product of V and T, the first data is represented by at least a V-dimensional vector, T is a channel type obtained by clustering channels in a current environment, T is an integer greater than or equal to 2, and V is an integer greater than 0.

9. The method according to any one of claims 1 to 7, wherein the method further comprises:
training, by the transmit end, the encoder neural network when the parameter of the matching layer remains unchanged.

10. The method according to any one of claims 1 to 7, wherein the method further comprises:
receiving, by the transmit end, second indication information from the receive end, wherein the second indication information indicates the transmit end to retrain the encoder neural network.

11. The method according to any one of claims 1 to 7, wherein the method further comprises:
sending, by the transmit end, third indication information to the receive end when training of the matching layer does not converge, wherein the third indication information indicates the receive end to retrain the encoder neural network.

12. A communication method, comprising:

receiving, by a receive end, a first received feature from a transmit end, wherein the first received feature comprises a feature that is received by the receive end and that is obtained by transmitting, through a channel, a first feature sent by the transmit end, the first feature is obtained by the transmit end by performing encoding processing on a first sent feature by using a matching layer, the first sent feature is obtained by an encoder neural network of the transmit end by performing encoding processing on first data, and the encoder neural network and the matching layer are obtained through independent training; and
performing, by the receive end, decoding processing on the first received feature by using a decoder neural network, to obtain the first data, wherein the decoder neural network and the matching layer are obtained through independent training.

13. The method according to claim 12, wherein the method further comprises:
sending, by the receive end, first indication information to the transmit end, wherein the first indication information indicates the transmit end to update a parameter of the matching layer.

14. The method according to claim 13, wherein the sending, by the receive end, first indication information to the transmit end comprises:
sending, by the receive end, the first indication information to the transmit end when a parameter representing a channel change degree is less than or equal to a first threshold.

15. The method according to any one of claims 12 to 14, wherein the method further comprises:
sending, by the receive end, second indication information to the transmit end when the parameter representing the channel change degree is greater than the first threshold, wherein the second indication information indicates the transmit end to retrain the encoder neural network.

16. The method according to claim 13 or 14, wherein after the sending, by the receive end, first indication information to the transmit end, the method further comprises:
receiving, by the receive end, third indication information from the transmit end, wherein the third indication information indicates the receive end to retrain the encoder neural network.

17. The method according to claim 13 or 14, wherein before the sending, by the receive end, first indication information to the transmit end, the method further comprises:
receiving, by the receive end, fourth indication information from the transmit end, wherein the fourth indication information indicates that training of the encoder neural network is completed.

18. The method according to claim 13 or 14, wherein after the sending, by the receive end, first indication information to the transmit end, the method further comprises:
sending, by the receive end, first information to the transmit end, wherein the first information is used by the transmit end to update the parameter of the matching layer.

19. A communication apparatus, comprising:

a processing module, configured to perform first encoding processing on first data by using an encoder neural network, to obtain a first sent feature, wherein the first sent feature is related to a channel distribution dimension of an environment in which a transmit end is located, and the processing module is further configured to perform second encoding processing on the first sent feature by using a matching layer, to obtain a first feature, the encoder neural network and the matching layer are obtained through independent training, and a dimension of the first feature is less than a dimension of the first sent feature; and
a transceiver module, configured to send the first feature to a receive end, wherein the first feature is used by the receive end to obtain the first data.

20. The apparatus according to claim 19, wherein

the processing module is further configured to:
update a parameter of the matching layer based on a current channel of the processing module, perform first encoding processing on second data by using the encoder neural network, to obtain a second sent feature, and perform second encoding processing on the second sent feature by using the updated matching layer, to obtain a second feature; and
the transceiver module is further configured to send the second feature to the receive end, wherein the second feature is used by the receive end to obtain the second data.

21. The apparatus according to claim 20, wherein the transceiver module is further configured to receive first indication information from the receive end, wherein the first indication information indicates the transmit end to update the parameter of the matching layer.

22. The apparatus according to claim 20, wherein a parameter of the encoder neural network remains unchanged in a process in which the transmit end updates the parameter of the matching layer.

23. The apparatus according to any one of claims 20 to 22, wherein
the processing module is specifically configured to update the parameter of the matching layer based on the current channel of the processing module, a third sent feature, and a third received feature, wherein the third received feature comprises a feature obtained by the receive end by receiving, on a first channel, a third feature sent by the transmit end, the third feature comprises a feature obtained by the transmit end by performing second encoding processing on the third sent feature by using the matching layer, and the current channel of the transmit end is different from the first channel.

24. The apparatus according to claim 23, wherein the processing module is further configured to obtain first information and determine the current channel of the transmit end based on the first information.

25. The apparatus according to claim 24, wherein the first information comprises channel information or received feature offset information from the receive end; and the channel information represents related information of the current channel of the transmit end, the received feature offset information represents a difference between the third received feature and a fourth received feature, the third received feature comprises the feature obtained by the receive end by receiving, on the first channel, the third feature sent by the transmit end, and the fourth received feature comprises a feature obtained by the receive end by receiving, on the current channel, the third feature sent by the transmit end.

26. The apparatus according to any one of claims 19 to 25, wherein the first sent feature comprises an L-dimensional vector related to the channel distribution dimension, L is a product of V and T, the first data is represented by at least a V-dimensional vector, T is a channel type obtained by clustering channels in a current environment, T is an integer greater than or equal to 2, and V is an integer greater than 0.

27. The apparatus according to any one of claims 19 to 25, wherein
the processing module is further configured to train the encoder neural network when the parameter of the matching layer remains unchanged.

28. The apparatus according to any one of claims 19 to 25, wherein
the transceiver module is further configured to receive second indication information from the receive end, wherein the second indication information indicates the transmit end to retrain the encoder neural network.

29. The apparatus according to any one of claims 19 to 25, wherein
the transceiver module is further configured to send third indication information to the receive end when training of the matching layer does not converge, wherein the third indication information indicates the receive end to retrain the encoder neural network.

30. A communication apparatus, comprising:

a transceiver module, configured to receive a first received feature from a transmit end, wherein the first received feature comprises a feature that is received by a receive end and that is obtained by transmitting, through a channel, a first feature sent by the transmit end, the first feature is obtained by the transmit end by performing encoding processing on a first sent feature by using a matching layer, the first sent feature is obtained by an encoder neural network of the transmit end by performing encoding processing on first data, and the encoder neural network and the matching layer are obtained through independent training; and
a processing module, configured to perform decoding processing on the first received feature by using a decoder neural network, to obtain the first data, wherein the decoder neural network and the matching layer are obtained through independent training.

31. The apparatus according to claim 30, wherein
the transceiver module is further configured to send first indication information to the transmit end, wherein the first indication information indicates the transmit end to update a parameter of the matching layer.

32. The apparatus according to claim 31, wherein
the transceiver module is specifically configured to send the first indication information to the transmit end when a parameter representing a channel change degree is less than or equal to a first threshold.

33. The apparatus according to any one of claims 30 to 32, wherein
the transceiver module is further configured to send second indication information to the transmit end when the parameter representing the channel change degree is greater than the first threshold, wherein the second indication information indicates the transmit end to retrain the encoder neural network.

34. The apparatus according to claim 31 or 32, wherein
the transceiver module is further configured to receive third indication information from the transmit end, wherein the third indication information indicates the receive end to retrain the encoder neural network.

35. The apparatus according to claim 31 or 32, wherein
the transceiver module is further configured to receive fourth indication information from the transmit end, wherein the fourth indication information indicates that training of the encoder neural network is completed.

36. The apparatus according to claim 31 or 32, wherein
the transceiver module is further configured to send first information to the transmit end, wherein the first information is used by the transmit end to update the parameter of the matching layer.

37. A computer-readable storage medium, wherein the computer-readable storage medium stores a computer program, the computer program comprises program instructions, and when the program instructions are executed by a processor, the processor is enabled to perform the method according to any one of claims 1 to 18.

38. A communication apparatus, wherein the communication apparatus comprises a processing circuit and an interface circuit, the interface circuit is configured to obtain data or output data, and the processing circuit is configured to perform the method according to any one of claims 1 to 18.

39. A computer program product, wherein the computer program product comprises a computer program or computer code, and when the computer program product is run on a computer, the method according to any one of claims 1 to 18 is performed.

**40.** A communication system, comprising the communication apparatus according to any one of claims 19 to 29 and the communication apparatus according to any one of claims 30 to 36.

FIG. 1

FIG. 2

FIG. 3

$$f \xrightarrow{\quad A_0 \quad} t$$

$$A' \downarrow \qquad\qquad \downarrow h_s$$

$$t' \xrightarrow{\quad h' \quad} r_s$$

FIG. 4

Target received
feature r

Loss

⟨r, r*⟩

Received feature r*

Gradient
(gradient)

Original
channel

Target
channel

Transmitted
feature t

Transmitted
feature t*

Memory buffer
Training set
D={f, r}

Matching layer
(second encoding
processing)

Sent feature f

Encoder neural network
(encoding processing)

Encoder neural network
(first encoding
processing)

Record the sent feature
and the received feature

Update the matching layer based on
the training set in the memory buffer

FIG. 5

FIG. 6A

FIG. 6B

FIG. 7A

FIG. 7B

EP 4 440 172 A1

```
┌──────────────┐                              ┌──────────────┐
│ Transmit end │                              │ Receive end  │
└──────┬───────┘                              └──────┬───────┘
       │                    801                      │
┌──────┴──────────────────────────────────┐         │
│  The transmit end performs first encoding │         │
│ processing on first data by using an encoder neural│  │
│    network, to obtain a first sent feature │         │
└──────┬──────────────────────────────────┘         │
       │                    802                      │
┌──────┴──────────────────────────────────┐         │
│  The transmit end performs second encoding │        │
│  processing on the first sent feature by using a │  │
│   matching layer, to obtain a first feature │       │
└──────┬──────────────────────────────────┘         │
       │          First feature      803             │
       │─────────────────────────────────────────────▶│
       │                                             │
```

FIG. 8

| Transmit end | | Receive end |

901

The transmit end performs first encoding processing on first data by using an encoder neural network, to obtain a first sent feature

902

The transmit end performs second encoding processing on the first sent feature by using a matching layer, to obtain a first feature

First feature                    903

First indication information        904

905

Update a parameter of the matching layer based on a current channel of the transmit end

906

The transmit end performs first encoding processing on second data by using the encoder neural network, to obtain a second sent feature

907

Perform second encoding processing on the second sent feature by using the updated matching layer when training of the matching layer converges, to obtain a second feature

Second feature                   908

FIG. 9

| Transmit end | | Receive end |
|---|---|---|

**1001**

The transmit end performs first encoding processing on first data by using an encoder neural network, to obtain a first sent feature

**1002**

Perform second encoding processing on the first sent feature by using a matching layer, to obtain a first feature

First feature **1003**

First indication information **1004**

**1005**

Update a parameter of the matching layer based on a current channel of the transmit end

**1006**

Send third indication information to the receive end when training of the matching layer does not converge

Third indication information

**1007**

Train the encoder neural network of the transmit end with the receive end

**1008**

Update the parameter of the matching layer based on the current channel of the transmit end when training of the encoder neural network of the transmit end converges

**1009**

Perform first encoding processing on second data by using the encoder neural network, to obtain a second sent feature

**1010**

Perform second encoding processing on the second sent feature by using the updated matching layer, to obtain a second feature

Second feature **1011**

FIG. 10

```
┌─────────────────┐                                  ┌─────────────────┐
│   Transmit end  │                                  │   Receive end   │
└─────────────────┘                                  └─────────────────┘
        │ 1101                                                 │
┌───────┴───────────────────────────────────┐                 │
│ The transmit end performs first encoding   │                 │
│ processing on first data by using an       │                 │
│ encoder neural network, to obtain a first  │                 │
│ sent feature                               │                 │
└───────┬───────────────────────────────────┘                 │
        │ 1102                                                 │
┌───────┴───────────────────────────────────┐                 │
│ Perform second encoding processing on the  │                 │
│ first sent feature by using a matching     │                 │
│ layer, to obtain a first feature           │                 │
└───────┬───────────────────────────────────┘                 │
        │         First feature           1103                 │
        │ ──────────────────────────────────────────────────> │
        │         Second indication information   1104         │
        │ <────────────────────────────────────────────────── │
        │ 1105                                                 │
┌───────┴─────────────────────────────────────────────────────┴─┐
│ Train the encoder neural network of the transmit end with the  │
│ receive end                                                    │
└───────┬─────────────────────────────────────────────────────┬─┘
        │ 1106                                                 │
┌───────┴───────────────────────────────────┐                 │
│ Update a parameter of the matching layer   │                 │
│ based on a current channel of the transmit │                 │
│ end when training of the encoder neural    │                 │
│ network of the transmit end converges      │                 │
└───────┬───────────────────────────────────┘                 │
        │ 1107                                                 │
┌───────┴───────────────────────────────────┐                 │
│ Perform first encoding processing on       │                 │
│ second data by using the encoder neural    │                 │
│ network, to obtain a second sent feature   │                 │
└───────┬───────────────────────────────────┘                 │
        │ 1108                                                 │
┌───────┴───────────────────────────────────┐                 │
│ Perform second encoding processing on the  │                 │
│ second sent feature by using the updated   │                 │
│ matching layer, to obtain a second feature │                 │
└───────┬───────────────────────────────────┘                 │
        │        Second feature           1109                 │
        │ ──────────────────────────────────────────────────> │
        │                                                      │
```

FIG. 11

Receive end

Transmit end

First received feature  1201

1202

Perform decoding processing on
the first received feature by
using a decoder neural network,
to obtain first data

FIG. 12

Receive end

Transmit end

First received feature  1301

1302

Perform decoding processing on
the first received feature by
using a decoder neural network,
to obtain first data

1303

Send first indication information
to the transmit end when a
parameter representing a channel
change degree is less than or
equal to a first threshold

First indication
information

FIG. 13

FIG. 14

```
┌──────────────────┐                              ┌──────────────────┐
│   Receive end    │                              │   Transmit end   │
└──────────────────┘                              └──────────────────┘
         │                                                 │
         │        First received feature      1501         │
         │◄────────────────────────────────────────────────│
         │    1502                                          │
┌────────┴─────────────────┐                                │
│ Perform decoding processing on the │                      │
│ first received feature by using a  │                      │
│ decoder neural network, to obtain first │                 │
│            data            │                               │
└────────┬─────────────────┘                                │
         │    1503                                          │
┌────────┴──────────────────────┐                           │
│ Send first indication information to the │  First indication │
│ transmit end when a parameter │      information            │
│ representing a channel change degree │─────────────────────►│
│ is less than or equal to a first threshold │                │
└────────┬──────────────────────┘                           │
         │         First information          1504          │
         │────────────────────────────────────────────────►│
         │      Third indication information    1505        │
         │◄────────────────────────────────────────────────│
         │                                     1506         │
┌────────┴──────────────────────────────────────────────────┐
│ The receive end trains an encoder neural network of the    │
│         transmit end with the transmit end                 │
└────────┬──────────────────────────────────────────────────┘
         │                                                 │
```

FIG. 15

| Transmit end | | Receive end |
|---|---|---|

1601

Initialize an encoder neural network and a matching layer

1602

The receive end initializes a decoder neural network

1603

Send a first trained feature to the receive end, and store a transmission task in a memory buffer of the transmit end

First trained feature ———▶

1604

Perform decoding processing on a received first trained received feature by using the decoder neural network, to obtain first received data

1605

Compute a loss value of a target function and gradient information based on the first received data and first sent data

1606

Train the decoder neural network based on the gradient information

◀——— Gradient information 1607

1608

Train the encoder neural network based on the gradient information

1609

Store a sent feature and a received feature by using the memory buffer

1610

When training of the decoder neural network is completed, fix the decoder neural network and continue to jointly train the encoder neural network under different channel distributions with the transmit end until pre-training is completed

1611

Determine a training method based on a channel change degree when a channel changes

◀——— First indication information 1612

◀——— First information 1613

1614

Update a parameter of the matching layer based on the sent feature and the received feature that are recorded in the memory buffer and a current channel

1615

Perform data transmission when training of the matching layer converges

FIG. 16

| Transmit end | | Receive end 1 | ... | Receive end N |

1701

Initialize an encoder neural network and a matching layer

1702

The receive end initializes a decoder neural network

1702

The receive end initializes a decoder neural network

Train an autoencoder on a current channel with a different receive end 1 ___1703

Train an autoencoder on a current channel with a different receive end N ___1703

1704

Separately record and update transmission task data between the transmit end and the different receive ends by using a memory buffer

Indicate the transmit end to complete training of the autoencoder ___1705

Indicate the transmit end to complete training of the autoencoder ___1705

1706

The transmit end performs data transmission with the receive end 1 after the transmit end completes training of the autoencoder with the receive end 1

First indication information ___1707

First information ___1708

1709

Update a parameter of the matching layer based on a sent feature and a received feature that are recorded in the memory buffer and the current channel

1710

Perform data transmission when training of the matching layer converges

FIG. 17

1800

Processing module 1801 — Transceiver module 1802

Communication apparatus

FIG. 18

1900

Transceiver module 1901 — Processing module 1902

Communication apparatus

FIG. 19

Communication apparatus 200

Transceiver 2010

Processor 2020

2040

Memory 2030

FIG. 20

2102

Interface

2101

Logic circuit

Communication apparatus 210

FIG. 21

## INTERNATIONAL SEARCH REPORT

| International application No. |
|---|
| **PCT/CN2022/139975** |

### A. CLASSIFICATION OF SUBJECT MATTER

H04W 16/10(2009.01)i

According to International Patent Classification (IPC) or to both national classification and IPC

### B. FIELDS SEARCHED

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

WPABSC; CNTXT; CJFD; CNKI; 3GPP; VEN; ENTXT: 发送, 接收, 编码网络, 译码网络, 匹配层, 信道, 维度, 训练, 独立, transmit+, send+, receiv+, encoding w network, decod+ w network, matched w layer, channel, dimension, train+, independent

### C. DOCUMENTS CONSIDERED TO BE RELEVANT

| Category* | Citation of document, with indication, where appropriate, of the relevant passages | Relevant to claim No. |
|---|---|---|
| A | CN 109039531 A (UNIVERSITY OF ELECTRONIC SCIENCE AND TECHNOLOGY OF CHINA) 18 December 2018 (2018-12-18) entire document | 1-40 |
| A | CN 110581732 A (SHANDONG JIANZHU UNIVERSITY) 17 December 2019 (2019-12-17) entire document | 1-40 |
| A | CN 113379040 A (SOUTHEAST UNIVERSITY) 10 September 2021 (2021-09-10) entire document | 1-40 |
| A | WO 2021041551 A2 (THE UNIVERSITY OF TEXAS SYSTEM) 04 March 2021 (2021-03-04) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2023** | **20 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# INTERNATIONAL SEARCH REPORT
**Information on patent family members**

International application No.

**PCT/CN2022/139975**

| Patent document cited in search report | | | Publication date (day/month/year) | Patent family member(s) | | | Publication date (day/month/year) |
|---|---|---|---|---|---|---|---|
| CN | 109039531 | A | 18 December 2018 | None | | | |
| CN | 110581732 | A | 17 December 2019 | None | | | |
| CN | 113379040 | A | 10 September 2021 | None | | | |
| WO | 2021041551 | A2 | 04 March 2021 | WO | 2021041551 | A3 | 26 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111583487